(19) 

**Europäisches Patentamt**
**European Patent Office**
**Office européen des brevets**

(11) **EP 4 572 196 A1**

(12) **EUROPEAN PATENT APPLICATION**
published in accordance with Art. 153(4) EPC

(43) Date of publication:
**18.06.2025   Bulletin 2025/25**

(21) Application number: **23852814.5**

(22) Date of filing: **27.07.2023**

(51) International Patent Classification (IPC):
*H04L 1/18* (2023.01)     *H04L 5/00* (2006.01)
*H04W 72/232* (2023.01)     *H04W 72/04* (2023.01)

(52) Cooperative Patent Classification (CPC):
**H04L 1/18; H04L 5/00; H04W 72/04; H04W 72/232**

(86) International application number:
**PCT/KR2023/010886**

(87) International publication number:
**WO 2024/034933 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.08.2022   KR 20220100129**
**28.09.2022   KR 20220123703**
**04.11.2022   KR 20220146484**
**14.04.2023   KR 20230049520**

(71) Applicant: **LG Electronics Inc.**
**Yeongdeungpo-gu**
**Seoul 07336 (KR)**

(72) Inventors:
• **YANG, Suckchel**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND APPARATUS FOR TRANSMITTING OR RECEIVING SIGNAL IN WIRELESS COMMUNICATION SYSTEM**

(57)     A UE according to an embodiment may receive a configuration of a plurality of first TDRA entries for each cell for individual scheduling of each cell, receive, by each entry for multiple cell scheduling, a configuration of a plurality of second TDRA entries including TDRA information for multiple cells, and receive DCI for the multiple cell scheduling through a PDCCH, wherein the DCI for the multiple cell scheduling provides one TDRA field for one or all of at least two cells scheduled together, a value of the one TDRA field is related to one of the plurality of second TDRA entries, and the TDRA information for the multiple cells included in each of the plurality of second TDRA entries may be configured on the basis of the plurality of first TDRA entries configured for the individual scheduling of each cell.

**FIG. 14**

**Description**

## TECHNICAL FIELD

The present disclosure relates to a wireless communication system, and more particularly, to a method and apparatus for transmitting or receiving a downlink/uplink radio signal in a wireless communication system.

## BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

## DISCLOSURE

## TECHNICAL TASKS

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

## TECHNICAL SOLUTIONS

In one technical aspect of the present disclosure, provided is a method of receiving a signal by a User Equipment (UE) in a wireless communication system, the method including receiving a configuration of a plurality of first Time Domain Resource Allocation (TDRA) entries for each cell for individual scheduling of each cell, receiving a configuration of a plurality of second TDRA Time Domain Resource Allocation (TDRA) entries each including TDRA information for multiple cells for multi-cell scheduling, and receiving Downlink Control Information (DCI) for the multi-cell scheduling through a Physical Downlink Control Channel (PDCCH). The DCI for the multi-cell scheduling may provide one TDRA field for all of one or more cells scheduled together. A value of the one TDRA field may be related to one of the plurality of second TDRA entries. And, the TDRA information for the multiple cells included in each of the plurality of second TDRA entries may be configured based on the plurality of first TDRA entries configured for individual scheduling of each cell.

Each of the second TDRA entries may be related to multiple TDRA parameter sets including a first TDRA parameter set for a first cell and a second TDRA parameter set for a second cell. The first TDRA parameter set may belong to the first TDRA entries configured for the first cell. And, the second TDRA parameter set may belong to the first TDRA entries set for the second cell. Each parameter set may include a combination of {K0, mapping_type, SLIV} parameters. 'KO' may indicate a slot offset from the PDCCH to a scheduled signal. 'mapping_type' may indicate a resource mapping type of the scheduled signal. And, 'SLIV' may indicate starting symbol and length information of the scheduled signal.

Each of the second TDRA entries may be related to a combination of N first TDRA entries for N cells.

The TDRA information of a first cell and the TDRA information of a second cell included in each of the second TDRA entries may be one of the first TDRA entries of the first cell and one of the first TDRA entries of the second cell, respectively.

The UE may transmit or receive a signal on the one or more cells scheduled together through the DCI for the multi-cell scheduling.

The configuration of the first TDRA entries and the configuration of the second TDRA entries may be received through higher layer signaling, respectively.

The plurality of first TDRA entries configured for each of the multiple cells may be related to N first TDRA tables for N cells. The plurality of second TDRA entries may be related to a single second TDRA table configured for the N cells.

In another technical aspect of the present disclosure, provided is a computer-readable recording medium having a program recorded thereon for performing the method described above.

In another technical aspect of the present disclosure, provided is a user equipment performing the method described above.

In another technical aspect of the present disclosure, provided is a device for controlling the user equipment performing the method described above.

In further technical aspect of the present disclosure, provided is a method of transmitting a signal by a base station in a wireless communication system, the method including transmitting a configuration of a plurality of first Time Domain Resource Allocation (TDRA) entries for each cell for individual scheduling of each cell, transmitting a configuration of a plurality of second TDRA Time Domain Resource Allocation (TDRA) entries each including TDRA information for multiple cells for multi-cell scheduling, and transmitting Downlink Control Information (DCI) for multi-cell scheduling through a Physical Downlink Control Channel (PDCCH). The DCI for the multi-cell scheduling may provide a single TDRA field for all of one or more cells scheduled together. A value of the single TDRA field may be related to one of the plurality of second TDRA entries. TDRA information for the multiple cells included in each of the plurality of second TDRA entries may be configured based on the plurality of first TDRA entries configured for individual scheduling of each cell.

In another further technical aspect of the present disclosure, provided is a base station performing the method described above.

## ADVANTAGEOUS EFFECTS

According to the present disclosure, wireless signal transmission and reception may be efficiently performed in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## DESCRIPTION OF DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDCCH/PDSCH reception and acknowledgment/negative acknowledgment (ACK/-NACK) transmission process.

FIG. 6 illustrates an exemplary physical uplink shared channel (PUSCH) transmission process.

FIG. 7 illustrates an example of carrier aggregation.

FIG. 8 illustrates an exemplary wireless communication system supporting an unlicensed band.

FIG. 9 illustrates a method of occupying a resource within an unlicensed band.

FIG. 10 is a diagram illustrating a table configuration of a TDRA field for multi-cell scheduling.

FIG. 11 illustrates an example of determining the A/N BPS bit number.

FIG. 12 illustrates an example of cells co-scheduled by DCI.

FIG. 13 illustrates an example of alignment of A/N bits.

FIG. 14 is a diagram illustrating a method of receiving a signal by a User Equipment (UE) according to an embodiment.

FIG. 15 is a diagram illustrating a method of transmitting a signal by a Base Station (BS) according to an embodiment.

FIG. 16 is a diagram illustrating a method of transmitting and receiving signals in a network system, according to an embodiment.

FIGS. 17 to 20 illustrate a communication system 1 and wireless devices applicable to the present disclosure.

FIG. 21 illustrates a discontinuous reception (DRX) operation applicable to the present disclosure.

## MODE FOR DISCLOSURE

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration," and both may be used interchangeably. Further, a conditional expression (e.g., "if", "in a case", or "when") may be replaced by "based on that" or "in a state/status." In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent disclosure or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

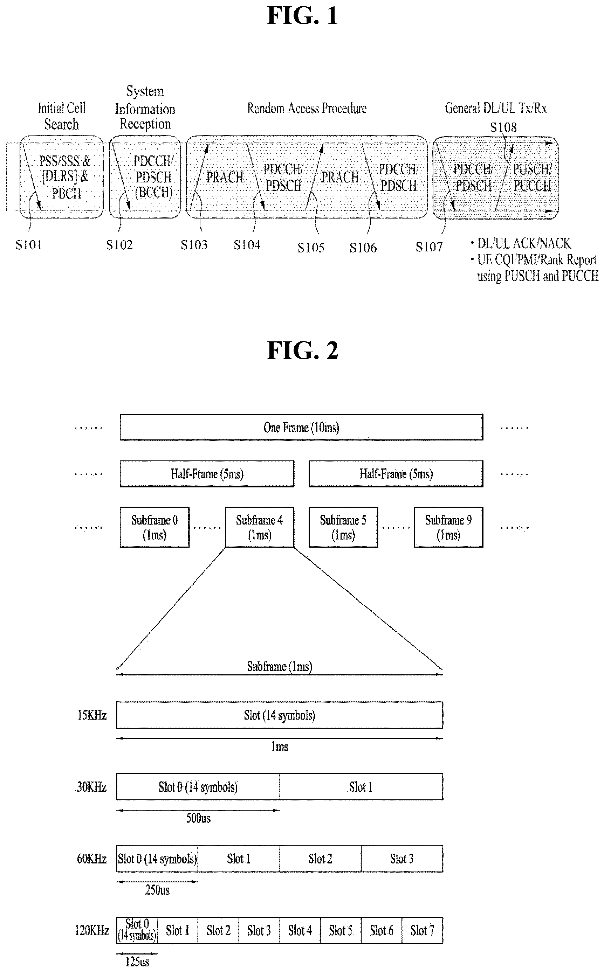

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

The purpose of the random access procedure (RACH procedure) is not limited to initial network access (e.g., S103 to S106). That is, the random access procedure may be used for various purposes. For example, the random access procedure may be used for at least one of an RRC connection re-establishment procedure, handover, UE-triggered UL data transmission, transition from RRC_INACTIVE, SCell time alignment, system information request, beam failure recovery, or UL resource request. However, the random access procedure is not limited thereto. The UE may acquire UL synchronization and/or UL transmission resources from the random access procedure.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot <br> * $N^{frame,u}_{slot}$: Number of slots in a frame <br> * $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

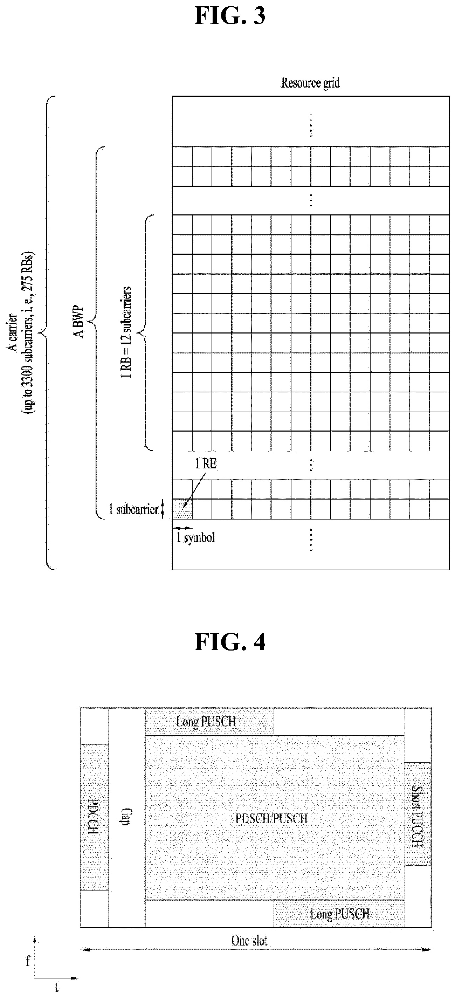

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured by higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters

- controlResourceSetId: A CORESET related to an SS

- monitoringSlotPeriodicity AndOffset: A PDCCH monitoring periodicity (in slots) and a PDCCH monitoring offset (in slots)

- monitoringSymbolsWithinSlot: PDCCH monitoring symbols in a slot (e.g., the first symbol(s) of a CORESET)

- nrofCandidates: The number of PDCCH candidates (one of 0, 1, 2, 3, 4, 5, 6, and 8) for each AL={1, 2, 4, 8, 16}

* An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |

(continued)

| Type | Search Space | RNTI | Use Case |
|---|---|---|---|
| | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

- SR (Scheduling Request): Information used to request UL-SCH resources.
- HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

- CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration. PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).
PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.
PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.
PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.
The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner.

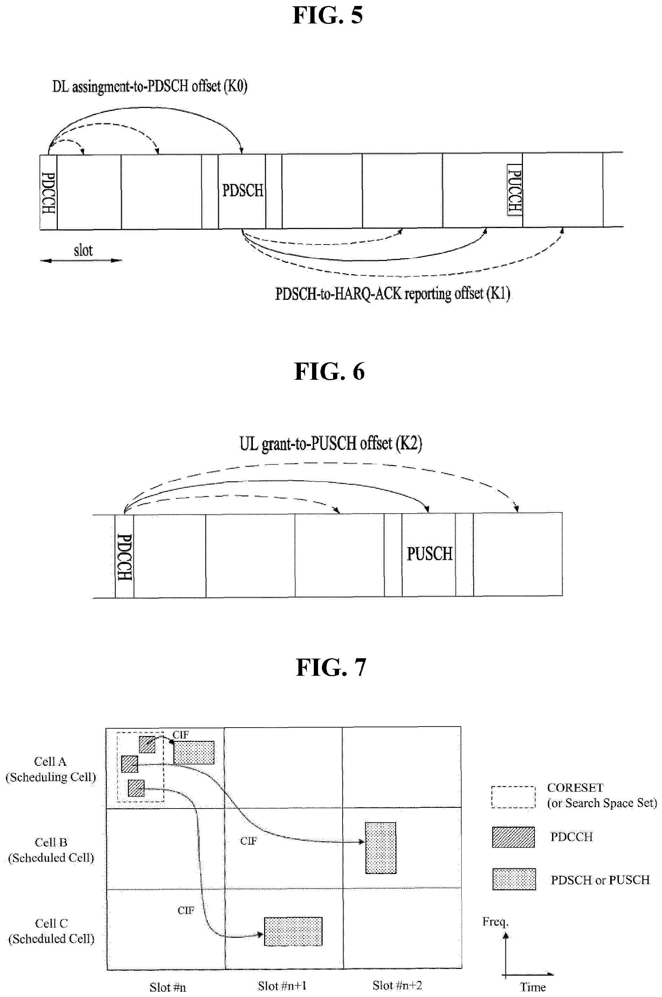

FIG. 5 illustrates an exemplary PDCCH/PDSCH reception and ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

- Frequency domain resource assignment: Indicates an RB set assigned to a PDSCH
- Time domain resource assignment: Indicates K0 and the starting position (e.g., OFDM symbol index) and length (e.g., the number of OFDM symbols) of the PDSCH in a slot.
- PDSCH-to-HARQ_feedback timing indicator: Indicates K1.
- HARQ process number (4 bits): Indicates the HARQ process ID of data (e.g., a PDSCH or TB).

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter *maxNrofCodeWordsScheduledByDCI* indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

On the other hand, an HARQ-ACK codebook is largely defined into three codebook types: Type-1, Type-2, and Type-3 according to an HARQ-ACK bit (payload) configuration method. In the case of the Type-1 codebook, an HARQ-ACK payload is configured according to a combination of a candidate HARQ-ACK timing (K1) set (configured for a corresponding cell) and a candidate PDSCH occasion (SLIV) set (e.g., a codebook of a semi-static fixed size based on RRC signaling). In the case of the Type-2 codebook, a codebook size may be changed dynamically depending on the number of PDSCHs actually scheduled or the number of corresponding resource allocations (e.g., downlink assignment index, DAI). In the case of the Type-3 codebook, an HARQ-ACK payload is configured by mapping an HARQ-ACK bit related to a corresponding HPN for each HARQ Process Number (HPN) according to a maximum HARQ process(es) number (configured for a corresponding cell per cell) (e.g., one-shot A/N reporting). Recently, an enhanced Type-3 codebook is added to the recent NR standard as a form of the Type-3 codebook. The enhanced Type-3 codebook is not a method of reporting an HARQ-ACK bit for all cells/HPNs at a time to reduce signaling overhead, but a method of reporting an HARQ-ACK bit for all cells/HPNs indicated to a Base Station (BS) among all cells/HPNs. Subsets of cells/HPNs associated with the enhanced Type-3 codebook are configured for a user equipment (UE) through higher layer signaling, and then one of the subsets configured for the UE may be indicated through DCI that triggers the enhanced Type-3 codebook. The UE may report an HARQ-ACK for the cells/HPNs belonging to the indicated subset.

In the case of the Type-1 codebook, a combination of all SLIVs that can be transmitted (or scheduled to be transmitted) within a DL slot before K1 slots from an A/N transmission slot for each K1 value is calculated in a state that a set of a plurality (e.g., N) of candidate K1 values (for a corresponding cell per cell), an A/N sub-payload (including a determination of an A/N bit position/order corresponding to each SLIV that can be transmitted within the corresponding slot) is configured (which is defined as "SLIV Pruning"), and an entire A/N codebook is then configured by concatenating such an A/N sub-payload to N K1 values. In this case, the set of (N) DL slots corresponding to each K1 value may be defined as a bundling window corresponding to the A/N transmission slot.

In the case of the Type-2 HARQ-ACK codebook, a codebook for transmitting HARQ-ACK information on the same PUCCH/PUSCH is defined based on a Counter-Downlink Assignment Indicator (C-DAI) indicated by an actually transmitted PDCCH and a Total-DAI (T-DAI) value. That is, the codebook is configured based on PDCCH information actually transmitted to a UE. When the UE fails in detection of a specific PDCCH, the UE transmits an NACK on a bit for the corresponding PDCCH among bits defined in the codebook. In this case, whether the PDCCH detection fails may be recognized by the UE through the C-DAI and the T-DAI value. The C-DAI is obtained by counting the accumulated number of {serving cell index, PDCCH monitoring occasion}-pairs provided by PDSCH receptions up to a current serving cell and a current PDCCH monitoring occasion. First, for a plurality of PDSCH receptions for the same {serving cell index, PDCCH monitoring occasion}-pair, a PDSCH with which a reception starts first is counted first (i.e., a lower C-DAI value is assigned). Next, when there are a plurality of pairs having the same PDCCH monitoring occasion index among different {serving cell index, PDCCH monitoring occasion}-pairs, a pair having a lower serving cell index is counted first. Next, when there are a plurality of pairs having the same serving cell index among different {serving cell index, PDCCH monitoring occasion}-pairs, a PDCCH monitoring occasion of a lower index is counted first.

In the case of the Type-3 codebook, specifically, one of Mode 1 for feeding back an HARQ-ACK and an NDI corresponding to the HARQ-ACK together and Mode 2 for feeding back only the HARQ-ACK without the NDI may be configured for the UE from the BS. When the UE is configured with Mode 1, it operates to feed back, per HARQ Process Number (HPN), an HARQ-ACK for a PDSCH reception of the corresponding HPN and an NDI (indicated through a DCI) together.

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information

- Frequency domain resource assignment: Indicates an RB set assigned to the PUSCH
- Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

Carrier aggregation

NR may support a wider uplink/downlink bandwidth by aggregating a plurality of uplink/downlink carriers (i.e., carrier aggregation). It is possible to transmit/receive signals in a plurality of carriers through carrier aggregation. When carrier aggregation is applied, each carrier (see FIG. A2) may be referred to as a Component Carrier (CC). CCs may be contiguous or non-contiguous to each other in the frequency domain. A bandwidth of each CC may be determined independently. Asymmetric carrier aggregation in which the number of UL CCs is different from the number of DL CCs is also possible.

- PCell (Primary Cell): In the case of a UE configured with carrier aggregation, a cell operating at a primary frequency (e.g., Primary Component Carrier (PCC)) at which the UE performs an initial connection establishment procedure or initiates a connection re-establishment procedure. In the case of Dual Connectivity (DC), a Master Cell Group (MCG) cell operating at a primary frequency at which the UE performs an initial connection establishment procedure or initiates a connection re-establishment procedure.
- Secondary Cell (SCell): In the case of a UE configured with carrier aggregation, a cell that provides a radio resource additionally other than a special cell.
- Primary SCG Cell (PSCell): In the case of DC, a Secondary Cell Group (SCG) cell in which a UE performs a random access when performing an RRC reconfiguration and synchronization process.
- Special Cell (SpCell): In the case of DC, a special cell represents a PCell of MCG or a PSCell of SCG. Otherwise (i.e., non-DC), a special cell represents a PCell.
- Serving Cell (ServCell): Indicates a cell configured for a UE in an RRC_CONNECTED state. If CA/DA is not configured, only one serving cell (i.e., PCell) exists. If CA/DA is configured, a serving cell represents a cell set including special cell(s) and all SCells.

Meanwhile, control information may be configured to be transmitted and received only through a specific cell. For example, UCI may be transmitted through a special cell (e.g., PCell). When an SCell (hereinafter, PUCCH-SCell) for which a PUCCH transmission is allowed is configured, UCI may also be transmitted through the PUCCH-SCell. For another example, a BS may allocate a scheduling cell (set) to reduce PDCCH Blind Decoding (BD) complexity at a UE side. For PDSCH reception/PUSCH transmission, a UE may perform PDCCH detection/decoding only in a scheduling cell. In addition, the BS may transmit a PDCCH only through the scheduling cell (set). For example, a PDCCH for downlink allocation may be transmitted in cell #0 (i.e., a scheduling cell), and a corresponding PDSCH may be transmitted in cell #2 (i.e., a scheduled cell) (Cross-Carrier Scheduling (CCS)). The scheduling cell (set) may be configured in a UE-specific, UE-group-specific, or cell-specific manner. The scheduling cell includes a special cell (e.g., PCell).

For the cross-carrier scheduling, a Carrier Indicator Field (CIF) is used. The CIF may be semi-statically disabled/enabled by UE-specific (or UE group-specific) higher layer (e.g., Radio Resource Control (RRC)) signaling. A CIF field is an x-bit field (e.g., x=3) in a PDCCH (i.e., DCI) and may be used to indicate a (serving) cell index of a scheduled cell.

- CIF disabled: A CIF is absent in a PDCCH. The PDCCH on a scheduling cell allocates a PDSCH/PUSCH resource on the same cell. That is, the scheduling cell is the same as a scheduled cell.
- CIF enabled: A CIF exists in a PDCCH. The PDCCH on scheduling may allocate a PDSCH/PUSCH resource on one of a plurality of cells using the CIF. A scheduling cell may be the same as or different from a scheduled cell. A PDSCH/PUSCH means a PDSCH or PUSCH.

FIG. 7 is a diagram illustrating carrier aggregation. In FIG. 7, it is assumed that three cells are aggregated. If a CIF is disabled, only a PDCCH for scheduling its PDSCH/PUSCH may be transmitted in each cell (Self-Carrier Scheduling (SCS)). On the other hand, if a CIF is enabled by UE-specific (or UE-group-specific or cell-specific) higher layer signaling and cell A is configured as a scheduling cell, not only a PDCCH for scheduling a PDSCH/PUSCH of the cell A but also a PDCCH for scheduling a PDSCH/PUSCH of another cell (i.e., scheduled cell) may be transmitted in the cell A(Cross-Carrier Scheduling (CCS)). In this case, a PDCCH for scheduling a cell of its own is not transmitted in cell B/C.

NR-shared spectrum/unlicensed band (NR-U) operation

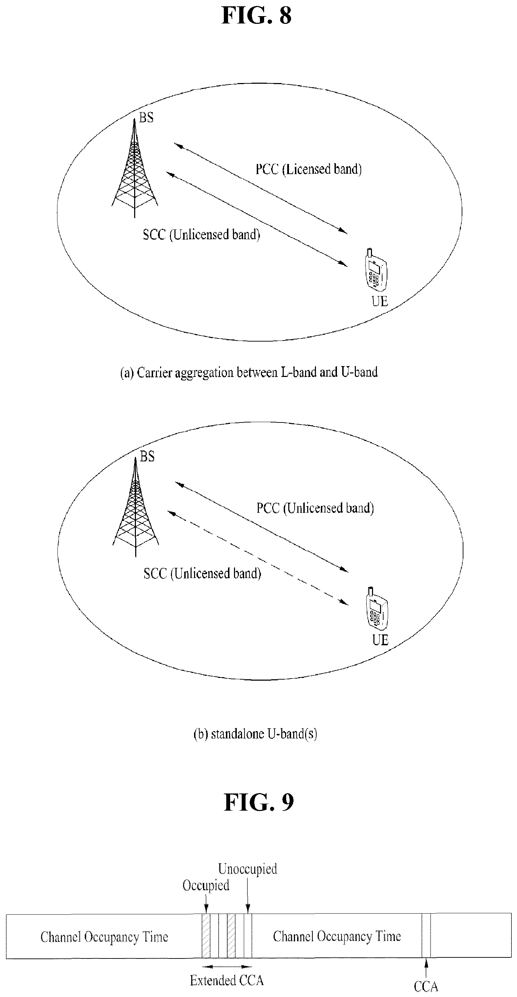

FIG. 8 illustrates a wireless communication system supporting an unlicensed band. For convenience, a cell operating in a licensed band (hereinafter, L-band) is defined as an LCell and a carrier of the LCell is defined as a (DL/UL) LCC. A cell operating in an unlicensed band (hereinafter, U-band) is defined as a UCell and a carrier of the UCell is defined as a (DL/UL) UCC. A carrier of a cell may represent an operating frequency (e.g., a center frequency) of the cell. A cell/carrier (e.g., CC) may generically be referred to as a cell.

When carrier aggregation is supported, one UE may transmit and receive signals to and from a BS in a plurality of aggregated cells/carriers. If a plurality of CCs is configured for one UE, one CC may be configured as a primary CC (PCC) and the other CCs may be configured as secondary CCs (SCCs). Specific control information/channels (e.g., a CSS PDCCH and PUCCH) may be configured to transmit and receive signals only in the PCC. Data may be transmitted and received in the PCC and/ or the SCCs. In FIG. 8(a), the UE and the BS transmit and receive signals in the LCC and the UCC (non-standalone (NSA) mode). In this case, the LCC may be configured as the PCC and the UCC may be configured as the SCC. If a plurality of LCCs is configured for the UE, one specific LCC may be configured as the PCC and the other LCCs may be configured as the SCCs. FIG. 8(a) corresponds to LAA of the 3GPP LTE system. FIG. 8(b) illustrates the case in which the UE and the BS transmit and receive signals in one or more UCCs without the LCC (SA mode). In this case, one of the UCCs may be configured as the PCC and the other UCCs may be configured as the SCCs. To this end, PUCCH, PUSCH, PRACH transmission can be supported. Both the NSA mode and the SA mode may be supported in an unlicensed band of the 3GPP NR system.

Unless otherwise mentioned, the definitions below are applicable to terms as used in the present disclosure

- Channel: A carrier or a part of a carrier including consecutive RBs in which a channel access procedure (CAP) is performed in a shared spectrum
- Channel access procedure (CAP): A procedure of evaluating the availability of a channel based on sensing to determine whether the channel is used by other communication node(s) before a signal transmission. A basic unit for sensing is a sensing slot with a duration Tsl of 9us. The sensing slot duration Tsl may be considered to be idle when a BS or a UE senses the channel during the sensing slot duration, and power detected for at least 4us within the sensing slot duration is less than an energy detection threshold XThresh. Otherwise, the sensing slot duration Tsl of 9us may be considered to be busy. A CAP may be referred to as listen-before-talk (LBT).
- Channel occupancy: Transmission(s) on channel(s) from a BS/UE after a CAP.
- Channel occupancy time (COT): A total time for which the BS/UE and any BS/UE(s) sharing the channel occupancy perform transmission(s) on the channel after the BS/UE corresponding CAPs. When a COT is determined, if a transmission gap is less than or equal to 25us, the gap duration may also be counted in the COT. The COT may be shared for transmission between the BS and corresponding UE(s).
- DL transmission burst: A set of transmissions from the BS without any gaps greater than 16us. Transmissions from the BS separated by a gap of more than 16us are considered as separate DL transmission bursts. The BS may perform transmission(s) after a gap within a DL transmission burst without sensing channel availability.
- UL transmission burst: A set of transmissions from the UE without any gaps greater than 16us. Transmissions from the UE separated by a gap of more than 16us are considered as separate UL transmission bursts. The UE may perform transmission(s) after a gap within a UL transmission burst without sensing channel availability.

- Discovery burst: A DL transmission burst including a set of signal(s) and/or channel(s) confined within a window and associated with a duty cycle. In the LTE-based system, a discovery burst may be transmission(s) initiated by a BS, including a primary synchronization signal (PSS), a secondary synchronization signal (SSS) and a cell-specific reference signal (CRS) and further including a non-zero power CSI-RS. In the NR-based system, a discovery burst may be transmission(s) initiated by a BS, including at least an SS/PBCH block and further including a CORESET for a PDCCH scheduling a PDSCH with SIB1, a PDSCH carrying SIB1, and/or non-zero power CS-RS.

FIG. 9 illustrates a method of occupying resources in an unlicensed band. According to regional regulations concerning the unlicensed band, a communication node in the unlicensed band needs to determine, before signal transmission, whether other communication nodes use a channel. Specifically, the communication node may first perform carrier sensing (CS) before signal transmission to check whether other communication nodes transmit signals. If it is determined that other communication nodes do not transmit signals, this means that clear channel assessment (CCA) is confirmed. When there is a predefined CCA threshold or a CCA threshold configured by higher layer (e.g., RRC) signaling, if energy higher than the CCA threshold is detected in a channel, the communication node may determine that the channel is in a busy state and, otherwise, the communication node may determine that the channel is in an idle state. For reference, in Wi-Fi standard (802.11ac), the CCA threshold is set to -62dBm for a non-Wi-Fi signal and to -82dBm for a Wi-Fi signal. Upon determining that the channel is in an idle state, the communication node may start to transmit signals in the UCell. The above processes may be referred to as listen-before-talk (LBT) or a channel access procedure (CAP). LBT and CAP may be used interchangeably.

Table 6 illustrates exemplary CAPs supported in NR-U.

[Table 6]

| | Type | Explanation |
|---|---|---|
| DL | Type 1 CAP | CAP with random back-off<br>- time duration spanned by the sensing slots that are sensed to be idle before a downlink transmission(s) is random |
| | Type 2 CAP<br>- Type 2A, 2B, 2C | CAP without random back-off<br>- time duration spanned by sensing slots that are sensed to be idle before a downlink transmission(s) is deterministic |
| UL | Type 1 CAP | CAP with random back-off<br>- time duration spanned by the sensing slots that are sensed to be idle before a downlink transmission(s) is random |
| | Type 2 CAP<br>- Type 2A, 2B, 2C | CAP without random back-off<br>- time duration spanned by sensing slots that are sensed to be idle before a downlink transmission(s) is deterministic |

Multi-cell Scheduling DCI

NR supports a wide spectrum in various frequency ranges. The usability of the 5G Advanced spectrum is expected to increase through re-farming of frequency bands used in the previous generation. In particular, in the case of FR1 that is a low frequency band, available spectrum blocks tend to be more subdivided and distributed. In the case of FR2 bands and some FR1 bands, an available spectrum may become wider, and thus, multiple carrier/cell operation within a band may be required. There is a need to improve throughput and coverage by using such a distributed spectrum band or a wider bandwidth spectrum in a more power-efficient and flexible manner.

It is important to increase flexibility and spectrum/power efficiency when scheduling data across multiple cells including intra-band cells and inter-band cells. In the current 5G NR scheduling method, a DCI can only perform PUSCH/PDSCH scheduling for one cell. However, the need for simultaneous scheduling of multiple cells is expected to increase in the future due to spectrum expansion/change, etc. To reduce the control overhead caused by scheduling, it is advantageous to perform PUSCH/PDSCH scheduling of multiple cells through one DCI.

In order to reduce the DCI overhead required for PDSCH/PUSCH scheduling in a Carrier Aggregation (CA) situation in which a plurality of e cells are configured in the future, it is able to consider a multi-cell scheduling method of simultaneously scheduling a plurality of (serving) cells/CCs (PDSCH/PUSCH transmission therethrough) with a single DCI in Rel-18.

Therefore, proposed is an efficient HARQ-ACK (called "A/N" for convenience) feedback configuration and transmission operation method considering a situation of simultaneously scheduling a plurality of PDSCHs on a plurality of cells based on the multi-cell DCI described above. The meanings of terms used (as described through FIG. 5 and FIG. 6) are summarized as follows. In addition, a cell may mean an (active) BWP configured/indicated to the corresponding cell.

- K0: A slot interval between a DCI (or PDCCH) transmission slot and a PDSCH transmission slot (scheduled from a corresponding DCI)
- SLIV (start symbol and length indicator value) (PDSCH occasion): Information about a start symbol and symbol duration (or end symbol) of PDSCH
- Mapping type: Information on whether a DMRS symbol position of PDSCH is determined based on a symbol index within a slot duration or a symbol index within a PDSCH duration
- Time Domain Resource Assistance (TDRA) table: Consists of a plurality of {K0, SLIV, mapping type} combinations (one combination is mapped to each of a plurality of rows in the table) and indicates a specific row through a corresponding DCI field
- K1: A slot interval between a PDSCH transmission slot and an HARQ-ACK transmission slot (for a corresponding PDSCH reception)

Hereinafter, Multi-cell Scheduling DCI may be referred to as Multi-cell DCI or DCI, and may include at least one of a DL grant DCI for scheduling a PDSCH and a UL grant DCI for scheduling a PUSCH.

[1] Type-1 HARQ-ACK codebook configuration in consideration of multi-cell PDSCH scheduling

1) Existing operation

In case of the existing Type-1 codebook, in a state that a set of a plurality of (e.g. N) candidate K1 values is configured, a combination of all PDSCH occasions (SLIV) transmittable within a DL slot ahead of K1 slots from an A/N transmission slot for each K1 value (configured for a corresponding cello per serving cell) is calculated to configure an A/N sub-payload corresponding to the corresponding DL slot (including a determination of an A/N bit position/order corresponding to each SLIV) (which is defined as "SLIV pruning"), and an entire A/N codebook is configured by concatenating such an A/N sub-payload for N K1 values (see Section 9.1.2 of 3GPP TS 38.213 V16.2.0). In this case, a set of (N) DL slots corresponding to each of the K1 values may be defined as a bundling window corresponding to the A/N transmission slot.

2) Proposed operation

A. For the proposed operation below, it is not limited to Type-1 codebook and may be applied to any (e.g., Type-1 or Type-2 or Type-3) HARQ-ACK codebook.
B. For the multi-cell (PDSCH scheduling), a plurality of SLIV combinations for a plurality of (one or more) cells may be mapped/configured to each of a plurality of (multi-SLIV) rows in an (extended) TDRA table, and a single (multi-SLIV) row can be indicated based on the corresponding table through a TDRA indication field included in a DCI. For example, through higher layer signaling, a first row of the TDRA table may be configured with a first SLIV combination, a second SLIV combination may be configured with a second SLIV combination, and an N$^{th}$ row may be configured with an the N$^{th}$ SLIV combination. Each SLIV combination may include one or more {K0, SLIV, mapping type}-parameter sets. For example, a specific row of the TDRA table may be configured with {K0, SLIV, mapping type}-parameter set #1, {K0, SLIV, mapping type}-parameter set #2, {K0, SLIV, mapping type}-parameter set #3,.., {K0, SLIV, mapping type}-parameter set #M, for scheduling of M cells.
C. On the other hand, if an invalid cell is included in the cells scheduled/indicated through the multi-cell DCI, it may operate to perform PDSCH reception only for the remaining cells without performing PDSCH reception for the corresponding invalid cell.

    i. The invalid cell may correspond to Case 1) a cell in which a PDSCH (PUSCH) resource indicated through a multi-cell DCI overlaps a semi-static UL (DL) symbol in time and/or Case 2) a cell in which a frequency resource of PDSCH (PUSCH) allocated through a multi-cell DCI is indicated as an invalid value (e.g., in the form of bitmap with all bits '0' or RIV with all bits '1') and/or Case 3) a cell in which a time resource of PDSCH (PUSCH) allocated through a multi-cell DCI is indicated as an invalid value (e.g., in the form of SLIV with all bits '1') or a cell in which a row (index) corresponding to a codepoint indicated through a TDRA field in a multi-cell DCI (e.g., a combination of {K0/K2, SLIV, mapping type}) is not configured or fails to exist within a TDRA table and/or Case 4) a cell in which a TB disabling operation is indicated for all TBs (of the corresponding cell) through a multi-cell DCI and/or Case 5) a deactivated Scell and/or Case 6) a cell operating as a dormant BWP and/or Case 7) a cell operating in DRX off state (no PDCCH monitoring) and/or Case 8) a cell corresponding to a specific time interval (or a specific BWP) configured/indicated to stop a series of transmission/reception operations for the purpose of base station energy/power saving, and/or the like.

ii. On the other hand, in order to reduce the complexity of the multi-cell DCI configuration and the scheduling-related operations, there may be a restriction that all SCSs used/applied to cells belonging to each cell combination (called "co-scheduled cell set" for convenience) scheduled simultaneously from the corresponding DCI should be of the same value. If an SCS used/applied between cells belonging to a specific co-scheduled cell set (active BWPs configured/indicated to each cell) has a different value, PDSCH/PUSCH transmission/reception may be performed only for cells to which a specific (valid) SCS is used/applied, and PDSCH/PUSCH transmission/reception may be omitted for the remaining cells to which an (invalid) SCS is used/applied. In this case, Case 9), a cell to which the corresponding invalid SCS is used/applied may correspond to the invalid cell.

1. In the case of the valid SCS above, it may preconfigured through RRC or the like (e.g., an individual valid SCS value is configured for each co-scheduled cell set or a single valid SCS value is configured common to all co-scheduled cell sets) or determined based on a specific rule (e.g., Alt 1) determined as an SCS value used/applied to a specific cell (e.g. a lowest cell index) belonging to a co-scheduled cell set, or Alt 2) determined as a smallest/largest value among SCSs used/applied to cells belonging to a co-scheduled cell set, or Alt 3) determined as an SCS value used/applied to the largest number of cells among cells belonging to a co-scheduled cell set (if there are multiple SCS values used/applied to the largest number of cells, a value determined by applying Alt 1/2 to the corresponding multiple SCS values).

D. In the case of a K1 indication field, in a state that only one K1 field is configured in the multi-cell DCI, only one K1 value applied based on a specific PDSCH #1 on a specific cell (out of a plurality of cells scheduled with the corresponding DCI) may be indicated through the corresponding K1 field. In this case, it may be determined to transmit HARQ-ACK feedback for all PDSCHs including PDSCH #1 (i.e., on a plurality of cells scheduled with the corresponding DCI) through a PUCCH (i.e., sub-) slot (i.e., an HARQ-ACK feedback transmission timing point) determined by applying the K1 value indicated through the above DCI to the corresponding PDSCH #1.

In the above case of PDSCH #1, it may be determined as Alt 1) a PDSCH on a cell having a lowest cell index (or a highest cell index) among multiple cells scheduled (through a same multi-cell DCI) (or the rest of the corresponding multiple cells except the invalid cell or Alt 2) a PDSCH having a latest transmission ending (or starting symbol timing point) among multiple PDSCHs on multiple cells scheduled (through a same multi-cell DCI) (or the rest of the corresponding multiple cells except the invalid cell).

In Alt 2, if there are a plurality of PDSCHs with the latest ending (or starting) symbol timing point among multiple PDSCHs (on multiple scheduled cells (or the rest of the corresponding multiple cells except the invalid cell)) (or if there are a plurality of PDSCHs with a latest PDSCH transmission slot (ending timing point) among the corresponding multiple PDSCHs), it may be determined as Alt A) a PDSCH transmitted based on a smallest SCS (or a largest SCS) among the corresponding (latest) multiple PDSCHs or Alt B) a PDSCH on a cell with a lowest cell index (or a highest cell index) among the corresponding multiple PDSCHs.

<u>3) Proposal 1-1</u>

When the multi-cell DCI-based PDSCH scheduling is configured, for a cell that becomes a multi-cell DCI scheduling target in performing the SLIV pruning process per cell for the Type-1 A/N codebook configuration, only an SLIV associated with a corresponding cell (among a plurality of SLIVs) mapped/configured to each multi-SLIV row in the extended TDRA table may be extracted and included in an SLIV set applied to an SLIV pruning process for the corresponding cell. (For convenience, this process is referred to as "SLIV set extension".).

i. On the other hand, the SLIV set extension may not be performed on the invalid cell (e.g., particularly a cell corresponding to the Case 5/6/7/8/9). (In other words, the invalid cell (e.g. Case 5/6/7/8/9) may be excluded/excepted during the SLIV set extension process).

1. Alternatively, the SLIV set extension may be performed on the invalid cell (e.g. Case 5/6/7/8/9), but on the invalid cell, the SLIV set extension may be performed based on parameters/values set in a specific DL/UL BWP (e.g., a first active DL/UP BWP initially activated and designated through a parameter firstActiveDownlinkBWP/-firstActiveUplinkBWP or a latest active DL/UP BWP activated most recently (except a dormant BWP)).

ii. As another method, in order to reduce UE complexity due to the performance of the SLIV set extension (the SLIV pruning process based on this), when configuring the extended TDRA table (to omit the SLIV set extension process), it may be restricted such that each multi-SLIV row is configured within the extended TDRA table in a manner that only TDRA rows/entries (e.g., SLIV and/or K0) belonging to the single-cell TDRA table configured for the existing single-cell DCI based scheduling usage per cell are combined between multiple cells.

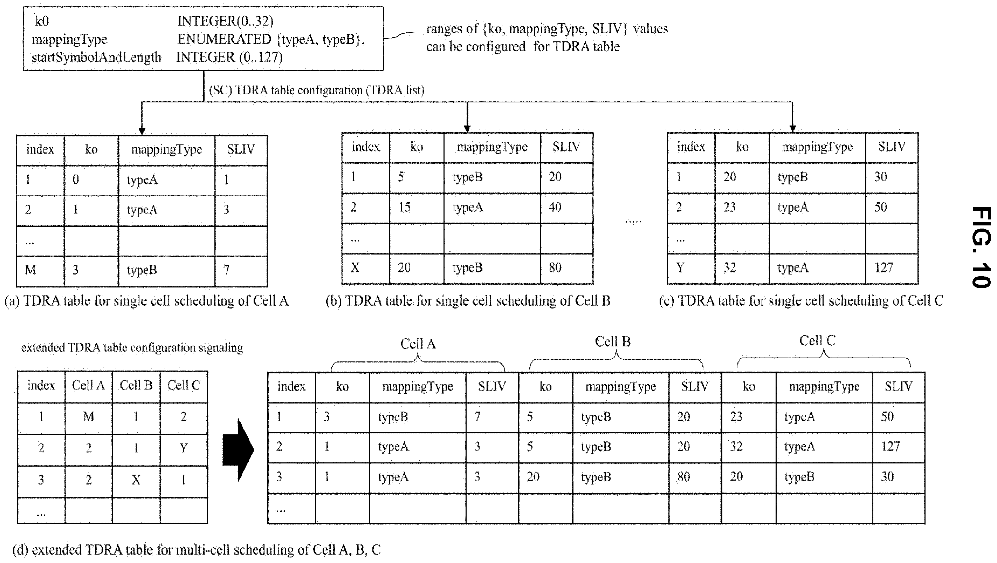

For example, referring to an example shown in FIG. 10, it is assumed that the ranges of {k0, mapping type, SLIV} parameters that may be configured through RRC signaling are '0-32, 'Type A or B', and '0-127', respectively, and that TDRA Tables (a), (b), and (c) are set in Cell A, Cell B, and Cell C based on these parameter ranges. In actual operation, each TDRA Table is set for each BWP of each cell, but for convenience of explanation, the BWP division is omitted in FIG. 10. TDRA Tables (a), (b), and (c) are set for scheduling of each individual cell, and when Cell A is scheduled through SC DCI format, a TDRA field in the SC DCI format indicates any one of indexes 1 to M in TDRA Table (a). When Cell B is scheduled through SC DCI format, a TDRA field in the SC DCI format indicates any one of indexes 1 to X in TDRA Table (b). When scheduling Cell C through SC DCI format, a TDRA field in a single-cell (SC) DCI format indicates any one of indexes 1 to Y of TDRA Table (c). When configuring an extended TDRA table for a TDRA field of multi-cell (MC) DCI as in this proposal, each entry (index) of the extended TDRA table indicates {k0, mapping type, SLIV} for each of Cell A, Cell B, and Cell C that may be scheduled together (actually, for each BWP of each cell). For example, the combinations of {k0, mapping type, SLIV} of the extended TDRA table (d) of FIG. 10 are configured based on M entries of TDRA table (a), X entries of TDRA table (b), and Y entries of TDRA table (c), which were configured in connection with SC DCI. TDRA tables (a), (b), and (c) become super-set of the extended TDRA table (d), and new {k0, mapping type, SLIV} combinations that are not included in any of TDRA tables (a), (b), and (c) are restricted so as not to be usable for the extended TDRA table (d). However, because the TDRA table (a), (b), and (c) combination and the extended TDRA table (d) have a Superset-Subset relationship, not all entities in TDRA tables (a), (b), and (c) have to be included in the extended TDRA table (d), and the entry/index order of the TDRA tables (a), (b), and (c) may also be reconfigured/changed in the extended TDRA table (d). However, entries of the TDRA table (a) are also used for Cell A (actually for the corresponding BWP of Cell A) in the extended TDRA table (d), not for Cell B or cell C. Similarly, entries of the TDRA table (b) are used for Cell B (actually for the corresponding BWP of Cell B) in the extended TDRA table (d), and entries of the TDRA table (c) are also used for Cell C (actually for the corresponding BWP of Cell C) in the extended TDRA table (d). In this way, when reconfiguring the extended TDRA table (d) using the TDRA tables (a), (b), and (c), which were previously set for the SC DCI, the problem of the increasing SLIV pruning overhead for MC DCI (e.g., the amount of computation/complexity required for SLIV pruning) may be minimized. For example, if SLIV pruning for each of the TDRA tables (a), (b), and (c) has already been performed for SC DCI, the corresponding result may be utilized again in the SLIV pruning process for the extended TDRA table (d), thereby minimizing the increase in the SLIV pruning overhead and solving the signaling overhead problem in configuring the extended TDRA table. Although FIG. 10 illustrates one TDRA table per cell for convenience of explanation, as described above, in reality, multiple TDRA tables may be configured for multiple BWPs configured in one cell, so the extended TDRA table is configured for all BWP combinations in all cells, and the size of the extended TDRA table is greatly increased. In this way, when new extended TDRA table entries are determined and signaled without any restrictions for all BWP combinations of all cells, there is a problem that the signaling overhead of the corresponding entries becomes very large due to the increase in the size of the extended TDRA table. However, when the extended TDRA table is reconfigured within the TDRA table configured for SC DCI as in the method of the present proposal, the signaling overhead problem may also be solved advantageously. For example, referring to FIG. 10, the signaling for configuring the extended TDRA table (d) does not include {k0, mapping type, SLIV} values included in the extended TDRA table as they are, but may set/indicate the configuration of the extended TDRA table using the row index of the TDRA table configured for SC DCI. Specifically, the signaling for configuring the extended TDRA table (d) may minimize the signaling overhead by setting/indicating [M,1,2] for a first row (i.e., index=1) of the extended TDRA table instead of setting/indicating [{k0=3, mapping type=B, SLIV=7}, {k0=5, mapping type=B, SLIV=20}, {k0=23, mapping type=A, SLIV=50}].

On the other hand, the application of the above proposal is not limited to the TDRA field of the MC DCI, but may also be applied to the extended table (extended parameter set) referenced by a single specific field of the MC DCI applied for the cells scheduled together. For example, if only one rate matching (RM) field and one SRS request field are included in MC DCI, an extended RM table referenced by the RM field may be constrained to be configured based on the entries of SC RM tables, and an extended SRS request table referenced by the SRS request field may be constrained to be configured based on the entries of SC SRS request tables.

iii. As further method, the SLIV set extension process is omitted (without placing the separate restriction (as above) on the extended TDRA table configuration), and the SLIV pruning process is performed based only on the single-cell TDRA table for each cell as before. Yet, if a PDSCH SLIV resource scheduled on a specific cell does not exist within the single-cell TDRA table configured in the corresponding cell, it may operate in a manner that the corresponding cell is considered/treated as the invalid cell, so that the PDSCH reception on the corresponding cell is omitted and the corresponding HARQ-ACK feedback is not configured.

4) Proposal 1-2

When the multi-cell DCI-based PDSCH scheduling is configured, regarding a cell that becomes a multi-cell DCI scheduling target in determining the bundling window per cell for the Type-1 A/N codebook configuration, if a difference (counted based on a PUCCH (sub-)slot) between a PDSCH (SLIV) reception timing point on the corresponding cell and the PDSCH #1 (SLIV) reception timing point is d slots with respect to each of (candidate) K1 values (and the (candidate) multi-SLIVs) configured to be indicated through a corresponding multi-cell DCI, a bundling window corresponding to the corresponding cell may be determined based on a set of {K1 + d} values resulting from adding it to the K1. (For convenience, this process is referred to as "K1 set extension".)

i. Specifically, regarding the cell becoming the multi-cell DCI scheduling target, with respect to each of the (candidate) K1 values (and the (candidate) multi-SLIVs) configured to be indicated through the corresponding multi-cell DCI, if a difference (counted based on a PUCCH (sub-)slot) between a last PUCCH (sub-)slot overlapping with the PDSCH (SLIV) reception timing point on the corresponding cell (e.g., a slot or a corresponding PDSCH transmission symbol on a cell having the corresponding PDSCH transmitted thereon) and a last PUCCH (sub-)slot overlapping with the PDSCH #1 (SLIV) reception timing point (e.g., a slot or a corresponding PDSCH #1 transmission symbol on a cell on which the PDSCH #1 is transmitted) is d slots, a bundling window corresponding to the corresponding cell may be determined based on a set of {K1 + d} values resulting from adding it to the K1.
ii. On the other hand, the K1 set extension may not be performed on the invalid cell (e.g., a cell corresponding to Case 5/6/7/8/9). (In other words, the invalid cell (e.g., Case 5/6/7/8/9) may be excepted/excluded during the above K1 set extension process.)

1. Alternatively, the K1 set extension may be performed for the invalid cell (e.g., Case 5/6/7/8/9) as well. Yet, on the invalid cell, the K1 set extension may be performed based on the parameters/values set in a specific DL/UL BWP (e.g., a first activated DL/UL BWP initially activated and designated through a firstActiveDownlinkBWP/first-ActiveUplinkBWP or a latest active DL/UL BWP activated (except a dormant BWP)).

iii. As another method, in order to reduce UE complexity due to the performance of the K1 set extension (the SLIV pruning process based thereon), all last symbols (ending) of PDSCHs scheduled on (one or more) multiple cells belonging to each co-scheduled cell set (to omit the K1 set extension process) may be restricted to belong to the same PUCCH (sub-)slot (e.g., so that K0 value applied to PDSCH reception and/or a last symbol (ending) position of PDSCH are set equally among the (simultaneously scheduled) multiple cells).
iv. As another method, the SLIV pruning process is performed based only on an original (original) K1 set in the same way as before by omitting the K1 set extension process (without any separate restrictions on the K0 and/or PDSCH ending configuration). Yet, if a DL slot including a PDSCH resource scheduled on a specific cell does not exist in a bundling window corresponding to the original K1 set, the corresponding cell may be considered/treated as the invalid cell, so that it may operate in a manner of omitting PDSCH reception on the corresponding cell and not configuring the corresponding HARQ-ACK feedback as well.
v. As further method, a base station may directly configure added K1 value(s) to be extended in addition to the original K1 set. Accordingly, a UE performs the SLIV pruning process based on a new K1 set of combining the original K1 set and the added K1 value together. Yet, if a DL slot including a PDSCH resource scheduled on a specific cell does not exist in a bundling window corresponding to the new K1 set, the cell may be considered/handled as an invalid cell, so that it may operate in a manner of omitting PDSCH reception on the corresponding cell and not configuring HARQ-ACK feedback as well.

[2] Type-2 HARQ-ACK codebook configuration in consideration of multi-cell PDSCH scheduling

1) Proposed operation

A. In the case of Type-2 codebook in a situation where the multi-cell DCI-based PDSCH scheduling is configured, a counter/total-DAI value may be independently determined and signaled for each of the existing single-cell (PDSCH scheduling) DCI (type) and the multi-cell (PDSCH scheduling) DCI (type) (i.e., the DCI/PDSCH order/total sum scheduled for each DCI type is independently determined/signaled, and an individual sub-codebook is configured for each DCI type based thereon) (In other words, a single-cell DCI may be signaled by determining a DAI value for the single-cell DCI only and a multi-cell DCI may be signaled by determining a DAI value for the multi-cell DCI only).
B. As another method, a counter/total-DAI value may be independently determined and signaled for each of a case that only one PDSCH (on a cell) is scheduled through single-cell DCI (single-cell case) and a case that a plurality of PDSCHs (on a cell) PDSCHs are scheduled through multi-cell DCI (multi-cell case) (i.e., DCI/PDSCH order/total sum scheduled for each case is independently determined/signaled, and an individual sub-codebook is configured for each case based thereon) (in other words, a DCI corresponding to the single-cell case may be signaled by determining a DAI value for the single-cell case only and a DCI corresponding to the multi-cell case may be signaled by determining a DAI value for the multi-cell case only).

  i. In the case of the single-cell case above, it may include Alt 1) a case that one PDSCH transmission (on cell) is indicated through single-cell DCI or Alt 2) a case that (one or) a plurality of PDSCH (on cell) transmissions are indicated through (single-cell DCI or) multi-cell DCI and that a UE actually receives only one PDSCH (on a cell) among them (e.g., except the invalid cell) (in case of Alt 2 that is the latter case, the multi-cell case may correspond to a case that a plurality of PDSCH transmissions (on cell) are indicated through multi-cell DCI and that a UE actually receives two or more PDSCHs (on cell) among them (e.g., except the invalid cell).

C. In addition, if the number of TBs simultaneously scheduled through multi-cell DCI is two (e.g., scheduling a PDSCH carrying one TB on each of two cells or scheduling a PDSCH carrying two TBs on one cell), the DAI value determination/signaling (for each case) and the sub-codebook configuration method may be applied exceptionally while considered/classified as the single-cell case.

  i. This method may be applied only when a single-cell DCI that schedules any (at least one) cell is configured to enable a scheduling for PDSCH transmission carrying two TBs, or irrespective of a presence or non-presence of such configuration.

D. In addition, if the maximum number of TBs simultaneously schedulable through multi-cell DCI is set to two (e.g., scheduling a PDSCH carrying one TB on each of two cells or scheduling a PDSCH carrying two TBs on one cell), a counter/total-DAI value may be exceptionally signaled by being determined common to all DCIs/cases in the same manner as before without the distinction between the single-cell DCI/case and the multi-cell DCI/case (i.e., the DCI/PDSCH order/total sum scheduled for the entire DCI/case is determined/signaled and only one (sub-)codebook is configured for the entire DCI/case based thereon).

  i. This method may only be applied when a single-cell DCI that schedules any (at least one) cell is configured to enable a scheduling for PDSCH transmission that carries two TBs, may be applicable irrespective of a presence or non-presence of such a configuration.

E. On the other hand, when multiple cells are configured (in form of CA) to a UE ((e.g., one PUCCH (cell) group configured to the corresponding UE) in an existing single-cell DCI-based operation situation, both counter-DAI field/information and total-DAI field/information are configured/indicated within DL (scheduling) DCI, whereas when only one cell is configured to the UE (in form of non-CA), only counter-DAI field/information may be configured/indicated within the DL DCI without the total-DAI field/information.

  i. The reason why it is possible to configure/indicate only the counter-DAI field/information in the DL DCI in the non-CA situation as described above is because only one DCI that schedules (the same) cell only is transmitted/received through one timing point (e.g. PDCCH monitoring accumulation or slot), so the total-DAI value representing the total number of cumulative DCIs/PDSCHs scheduled so far and the counter-DAI value representing the order of the nth scheduled DCI/PDSCH were scheduled are the same.

F. On the other hand, if only one cell combination consisting of specific multiple cells is configured to be scheduled/indicated through DL multi-cell DCI (for one PUCCH group configured to a UE) in a situation that the multi-cell DCI based (DL) scheduling is configured (i.e., not configured to enable scheduling/indication for another cell combination or a single cell), (because only one DCI that schedules the corresponding cell combination is transmitted/received through one timing point (e.g. PDCCH monitoring accumulation or slot)) only counter-DAI field/information may be configured/indicated within the DL multi-cell DCI (without total-DAI field/information).

  i. Otherwise, if it is configured to enable scheduling/indication for a plurality of cell combinations or a single cell through DL multi-cell DCI (for one PUCCH group configured to a UE), both counter-DAI field/information and total-DAI field/information may be configured/indicated in the DL multi-cell DCI.

G. Alternatively, if it is configured to enable scheduling/indication for only one cell combination consisting of specific multiple cells through DL multi-cell DCI (for one PUCCH group configured to a UE) (i.e., it is not configured to enable scheduling/indication for another cell combination or a single cell) in a situation that the multi-cell DCI based (DL) scheduling is configured, or if it is configured to enable scheduling/indication only for specific multiple cell combinations (each cell combination consists of a plurality of cells) through DL multi-cell DCI (i.e., not configured to enable scheduling/indication for another cell combination or a single cell) and each cell combination belonging to the corresponding multiple cell combinations is configured in a manner of including at least one cell belonging to each of the rest of the cell combinations (other than the corresponding cell combination) (e.g., if three cell combinations are {cell 1, cell 3}, {cell 2, cell 3, cell 4}, and {cell 1, cell 4} respectively), (since only one DCI that schedules only one cell combination among the corresponding multiple cell combinations is transmitted/received through one timing point (e.g. PDCCH monitoring occlusion or slot)), only counter-DAI field/information may be configured/indicated within the DL multi-cell DCI (without total-DAI field/information).

i. Otherwise, if it is configured to enable scheduling/indication for multiple cell combinations consisting of different cells (without the same cell) (e.g., two cell combinations corresponding to {cell 1, cell 2} and {cell 3, cell 4}) or a single cell through DL multi-cell DCI (for one PUCCH group configured to a UE), both counter-DAI field/information and total-DAI field/information may be configured/indicated within the DL multi-cell DCI.

2) Proposal 2-1

(For reference, before explaining this proposal, for understanding a counter-DAI (counter-DAI for single cell scheduling) defined in the existing standard, the description of the Type-2 HARQ-ACK codebook described in connection with FIG. 5 may be referred to.)

A. When a plurality of (multi-cell) DCIs including the multi-cell DCI (and/or multi-PDSCH DCI) are transmitted/received through the same timing point (e.g., PDCCH monitoring occasion or slot), a counter-DAI value corresponding to a corresponding multi-cell DCI (signaled through the corresponding DCI) based on the lowest (or highest) cell index among a plurality of cells scheduled by the corresponding multi-cell DCI (in addition, in determining a last DCI containing a PUCCH Resource Indicator (PRI) indicating a PUCCH resource for HARQ-ACK transmission for PDSCH reception, (when a plurality of (multi-cell) DCIs are transmitted/received through a same timing point (last while indicating the same HARQ-ACK transmission timing point), a last DCI may be determined based on the lowest (or highest) cell index among the multiple cells scheduled by the multi-cell DCI).

i. For example, in case that two multi-cell DCIs are transmitted/received at the same timing point (e.g., PDCCH monitoring occasion or slot), when a lowest (or highest) cell index scheduled with each DCI (among a plurality of cells) is compared, it may be a structure in which a counter (DAI) value corresponding to the DCI scheduling a lower cell index may be determined/signaled. For example, it is assumed that a plurality of DCIs received at the same timing point include at least one multi-cell DCI, that a first DCI of the at least one multi-cell DCI schedules {Cell A, Cell B, and Cell C}, and that the Cell A has a lower cell index than the Cell B and the Cell C. A second DCI received at the same timing point as the first DCI may be a multi-cell DCI or a single-cell DCI. It is assumed that a cell having the lowest cell index among one or more cells scheduled by the second DCI is Cell D. If a cell index of Cell A is smaller than that of Cell D, a C-DAI value of the first DCI is counted first (e.g., with respect to multi-cell scheduling of Cell A, Cell B, and Cell C), and a C-DAI value of the second DCI is then counted. If Cell A's cell index > Cell D's cell index, the C-DAI value of the second DCI is counted first and then the C-DAI value of the first DCI is counted. As an additional example, when two (multi-cell) DCIs are transmitted/received through the same timing point (last while indicating the same HARQ-ACK transmission timing point), when comparing the lowest (or highest) cell index scheduled with each DCI (among multiple cells), the DCI that schedules the highest cell index may be determined as the last DCI, whereby a PUCCH resource may be determined based on a PRI indicated through the corresponding DCI.

ii. In the above, if the lowest (or highest) cell index scheduled by each DCI is the same, it may be a structure in which a counter (DAI) value corresponding to a DCI that schedules a PDSCH with an earlier starting (or ending) symbol timing point among PDSCHs transmitted on a cell with the corresponding cell index is determined/signaled as a lower value. Additionally, if the lowest (or highest) cell index scheduled with each DCI is the same, a DCI that schedules a PDSCH with a latest starting (or ending) symbol timing point among PDSCHs transmitted on a cell with the corresponding cell index may be determined as the last DCI, whereby a PUCCH resource may be determined based on a PRI indicated through the corresponding DCI.

iii. On the other hand, in the case of the multiple cells scheduled by multi-cell DCI or the multiple cells scheduled with multi-cell DCI, they may considered/applied as the rest of the corresponding multiple cells except the invalid cell.

B. As another method, if a plurality of (multi-cell) DCIs including the multi-cell DCI(and/or multi-PDSCH DCI), are transmitted/received at the same timing point (e.g. PDCCH monitoring occasion or slot), a counter-DAI value corresponding to the multi-cell DCI (signaled through the corresponding DCI) may be determined based on a PDSCH with an earliest transmission starting (or ending) symbol timing point among a plurality of PDSCHs on a plurality of cells scheduled by the corresponding multi-cell DCI. Additionally, in determining a last DCI containing a PRI indicating a PUCCH resource for HARQ-ACK transmission for PDSCH reception, (when a plurality of (multi-cell) DCIs are transmitted/received through the same timing point (last while indicating the same HARQ-ACK transmission timing point) the last DCI may be determined based on a PDSCH having an earliest transmission starting (or ending) symbol timing point among multiple PDSCHs on multiple cells scheduled by the multi-cell DCI.

    i. For example, if two multi-cell DCIs are transmitted/received at the same timing point, when comparing a PDSCH with an earliest starting (or ending) symbol timing point scheduled for each DCI (among a plurality of PDSCHs on a plurality of cells), a counter (DAI) value corresponding to the DCI scheduling a PDSCH with an earlier starting (or ending) symbol timing point may be determined/signaled as a lower value. As an additional example, if two (multi-cell) DCIs are transmitted/received through the same timing point (last while indicating the same HARQ-ACK transmission timing point), when comparing a PDSCH with an earliest starting (ending) symbol timing point scheduled with each DCI (among multiple PDSCHs on multiple cells), a DCI that schedules the PDSCH with a latest starting (or ending) symbol point is determined as the last DCI, so that a PUCCH resource may be determined based on a PRI indicated through the corresponding DCI.

    ii. In the above description, if the starting (or ending) symbol timing point of the PDSCH with the earliest starting (or ending) symbol timing point scheduled by each DCI is the same, it may be a structure in which a counter (DAI) value corresponding to a DCI that schedules a PDSCH transmitted on a cell with a lower cell index among the corresponding PDSCHs may be determined/signaled as a lower value. Additionally, if the starting (or ending) symbol timing point of the PDSCH with the latest starting (or ending) symbol timing point scheduled with each DCI is the same, a DCI that schedules a PDSCH transmitted on a cell with the highest cell index among the corresponding PDSCHs is determined as the last DCI, whereby a PUCCH resource may be determined based on a PRI indicated through the corresponding DCI.

    iii. On the other hand, in the case of the multiple cells scheduled by the multi-cell DCI or the multiple cells scheduled with the multi-cell DCI in the above description, they may be considered/applied as the rest of the corresponding multiple cells except the invalid cell.

C. As another method, when a plurality of (multi-cell) DCIs including the multi-cell DCI (and/or multi-PDSCH DCI) are transmitted/received at the same timing point (e.g. PDCCH monitoring occasion or slot), a counter-DAI value corresponding to the multi-cell DCI (or signaled through the corresponding multi-cell DCI) may be determined based on a PDSCH with a latest transmission starting (or ending) symbol timing point among a plurality of PDSCHs on a plurality of cells scheduled by the corresponding multi-cell DCI. Additionally, in determining a last DCI containing a PRI indicating a PUCCH resource for HARQ-ACK transmission for PDSCH reception, (when a plurality of (multi-cell) DCIs are transmitted/received through the same timing point (last while indicating the same HARQ-ACK transmission timing point) the last DCI may be determined based on a PDSCH with a latest transmission starting (or ending) symbol timing point among multiple PDSCHs scheduled by the multi-cell DCI,.

    i. For example, in case that two (multi-cell) DCIs are transmitted/received at the same timing point, when comparing a PDSCH with a latest starting (or ending) symbol timing point scheduled by each DCI (among a plurality of PDSCHs on a plurality of cells) scheduled by each DCI, it may be a structure in which a counter (DAI) value corresponding to the DCI scheduling a PDSCH with an earlier starting (or ending) symbol timing point may be determined/signaled as a lower value. As an additional example, if two (multi-cell) DCIs are transmitted/received through the same timing point (last while indicating the same HARQ-ACK transmission timing point), when comparing a PDSCH with a latest starting (or ending) symbol timing scheduled with each DCI (among multiple PDSCHs on multiple cells), a DCI that schedules the PDSCH with the latest starting (or ending) symbol timing point is determined as the last DCI, whereby a PUCCH resource may be determined based on a PRI indicated through the corresponding DCI.

    ii. In the above description, if a starting (or ending) symbol timing point of a PDSCH with a latest starting (or ending) symbol timing point scheduled by each DCI is the same, it may be a structure in which a counter (DAI) value corresponding to the DCI that schedules a PDSCH transmitted on a cell with a lower cell index is determined/-signaled as a lower value. Additionally, in the above description, if the starting (or ending) symbol timing point of the PDSCH with the latest starting (or ending) symbol timing point scheduled with each DCI is the same, a DCI that schedules a PDSCH transmitted on a cell with the highest cell index among the corresponding PDSCHs is determined as the last DCI, whereby a PUCCH resource may be determined based on a PRI indicated through the corresponding DCI.

iii. On the other hand, in the above description, in the case of the multiple cells scheduled by the multi-cell DCI or the multiple cells scheduled with the multi-cell DCI, they may be considered/applied as the rest of the corresponding multiple cells except the invalid cell.

3) Proposal 2-2

For example, the A/N bit number per DAI value in a multi-cell case may be determined by considering at least one of the maximum number of cells (in the same PUCCH group) that can be co-scheduled through one (multi-cell) DCI, the number (e.g., 1 or 2) of TBs (or codewords) supported per PDSCH, and whether spatial bundling for A/N is configured.

A. The number of A/N bits corresponding to one DAI (for convenience, referred to as "DAI A/N size for multi-cell case") for the multi-cell case (and/or multi-cell DCI) may be determined based on the maximum number of cells that can be simultaneously scheduled through a single multi-cell DCI if spatial (domain) A/N bundling between (two) TBs transmitted on the same PDSCH is configured (or if only a single TB transmission is available for all multi-cell DCI scheduling target cells). If the spatial bundling is not configured, it may be determined based on the maximum number of TBs that can be simultaneously scheduled through a single multi-cell DCI (considering all simultaneously schedulable cell combinations and the maximum number of (transmittable) TBs configured for each cell) (equally, for each of the simultaneously schedulable cell combinations, a sum of the maximum TB number set for each cell within the corresponding cell combination is calculated, and a maximum value is selected from the sums of the maximum TB numbers per cell combination) (for convenience, such a process is referred to as "multi-cell DAIA/N size" calculation/decision process).

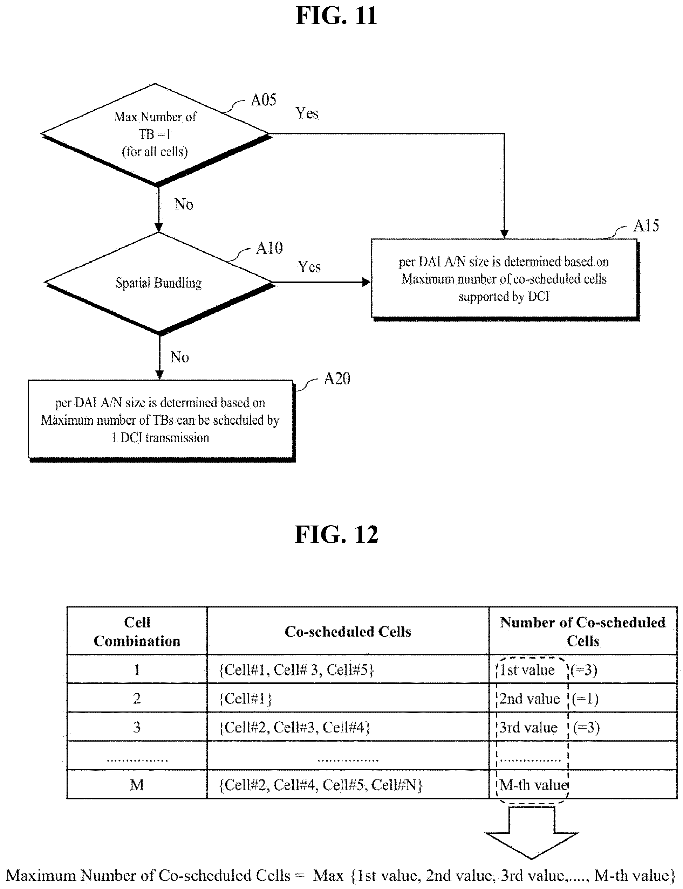

i. Meanwhile, in the case of the multi-cell DAI A/N size, it may be calculated/determined while excluding/excepting the invalid cell (e.g., the cell corresponding to the Case 5/6/7/8/9). In other words, the multi-cell DAI A/N size may be calculated/determined based only on the remaining cells except the invalid cell (e.g., Case 5/6/7/8/9) (for example, in a state of assuming that each cell combination simultaneously schedulable includes the remaining cells except the invalid cell (e.g., Case 5/6/7/8/9)). For example, referring to FIG. 11, if the per-PDSCH TB (or CW) number is set to 1 for all cells that can be scheduled through a multi-cell DCI [A05], or if spatial A/N bundling between TBs is configured for a cell although the cell with the per-PDSCH TB number of 2 is included [A10], a DAI A/N size may be determined based on the maximum number of cells that can be scheduled through one multi-cell DCI. For example, referring to FIG. 12, assuming that M co-scheduled cell combinations are configured for a UE and that a multi-cell DCI performs multi-cell scheduling through one of the M co-scheduled cell combinations, the maximum number of cells that can be co-scheduled through one multi-cell DCI may be Max {1st value, 2nd value, 3rd value,...., M-th value}. For example, assuming Max {1st value, 2nd value, 3rd value,...., M-th value} = X, the DAI A/N size may be X-bit. For example, if X-bit is allocated for each Counter DAI value and the HARQ-ACK codebook (e.g., type-2 HARQ-ACK codebook) is configured for a total of C1 Counter DAI values, the HARQ-ACK codebook may include C1*X A/N bits. This may mean that 1 A/N bit is allocated per scheduled cell for 1 DCI if the per-PDSCH TB (or CW) number is set to 1 for all cells that can be scheduled through the multi-cell DCI [A05, Yes] or if the spatial A/N bundling between TBs is configured for the cell although the corresponding cell with the per-PDSCH TB number of 2 is included [A10, Yes].

If a cell (at least one cell) with the per-PDSCH TB number of 2 and no TB-to-TB spatial A/N bundling configured therefor among cells schedulable through a multi-cell DCI is included [A10, No], a DAI A/N size may be determined based on the maximum number of TBs schedulable through one multi-cell DCI. For example, assuming that the maximum number of TBs that can be scheduled through one multi-cell DCI is Y, if the HARQ-ACK codebook (e.g., type-2 HARQ-ACK codebook) is configured for total C1 Counter DAI values, the HARQ-ACK codebook may include C1*Y A/N bits. For example, assuming that 2-TB is configured for Cell #1 and Cell #3 in FIG. 12, that 1-TB is configured t for the remaining cells, and that spatial bundling is not configured for (at least one of) Cell #1 and Cell #3, the number of TBs that can be scheduled through Cell combination 1 may be 2+2+1=5, the number of TBs that can be scheduled through Cell combination 2 may be 2, the number of TBs that can be scheduled through Cell combination 3 may be 1+2+1=4, and the number of TBs that can be scheduled through Cell combination M may be 1+1+1+1=4. The DAI A/N size may be determined based on the Cell combination with the largest number of TBs that can be scheduled among M cell combinations configured for a UE.

B. On the other hand, if only one DCI (corresponding to the multi-cell case) indicating a corresponding (sub-)slot for a specific A/N feedback transmission (sub-)slot as an A/N transmission timing is scheduled/received (e.g., if only one DCI with both counter-DAI and total-DAI values indicated as 1 is received), the number of A/N bits corresponding to the multi-cell case may be determined equal to the number of PDSCHs (if spatial bundling is configured or only a single TB transmission is configured for all multi-cell DCI scheduling target cells) scheduled/indicated through the corresponding DCI, or the number of TBs (if the spatial bundling is not configured) scheduled/indicated through the corresponding DCI.

i. On the other hand, even in this case, the number of A/N bits corresponding to the multi-cell case may be determined based on only the remaining cells except the invalid cell among the cells scheduled/indicated through the DCI.

4) Proposal 2-3

A. If independent DAI counting is performed between the single-cell case (and/or single-cell DCI. For convenience, named a single-cell case as a collective name for a single-cell case and a single-cell DCI) and the multi-cell case (or multi-cell DCI. For convenience, named a multi-cell case as a collective name for a multi-cell case and a multi-cell DCI), a UE may configure individual sub-codebooks for the single-cell case and the multi-cell case, respectively, and may operate to configure an entire codebook in a concatenation form of appending sub-codebook #2 corresponding to the multi-cell case to the sub-codebook #1 corresponding to the single-cell case (or vice versa, i.e., the entire codebook may be configured in the form of appending the sub-codebook #1 to the sub-codebook #2). (i) For example, the sub-codebook #1 may include A/N-bit(s) for a single cell DCI(s) and A/N-bit(s) for multi cell DCI(s) for scheduling PDSCH for only one cell, and the sub-codebook #2 may include A/N-bit(s) for multi cell DCI(s) for scheduling PDSCHs for at least two cells. (ii) For another example, the sub-codebook #1 may include A/N-bit(s) for single cell DCI(s) and the sub-codebook #2 may include A/N-bit(s) for multi cell DCI(s) for scheduling PDSCH for one cell only and A/N bit(s) for multi cell DCI(s) for scheduling PDSCHs for at least two cells.

B. Meanwhile, a CB Group (CBG) based PDSCH transmission (DCI for scheduling it) may be configured on a specific cell (such PDSCH scheduling is referred to as CBG-PDSCH case) and the number of A/N bits corresponding to a corresponding PDSCH/DCI (for convenience, called "DAI A/N size for CBG-PDSCH case") may be determined as the maximum number of CBGs that can be configured/transmitted on a single PDSCH configured on the corresponding cell, and/or based on a single DCI (for convenience, referred to as "multi-PDSCH (or multi-PUSCH) DCI"), an operation of simultaneously schedule a plurality of TDMed PDSCHs (or PUSCHs) (on the corresponding cell) may be configured (such PDSCH scheduling is referred to as multi-PDSCH case) and the number of A/N bits related to the corresponding DCI (for convenience, referred to as "DAI A/N size for multi-PDSCH case") may be determined based on {the maximum number of schedulable PDSCHs, the maximum number of TBs transmittable per PDSCH, a presence or non-presence of spatial bundling configuration, a presence or non-presence/unit of time (domain) A/N bundling configuration} configured on the corresponding cell/DCI, and DAI counting and sub-codebook configuration in a situation where both the CBG-PDSCH case and/or the multi-PDSCH case and the multi-cell case are configured may be performed in the following manner.

- Opt 3-1: Independent DAI counting may be performed between the multi-cell case and the CBG-PDSCH case (or multi-PDSCH case) and an individual e sub-codebook may be configured for each. In this case, it may operate to configure a whole codebook by concatenation in a manner of appending sub-codebook #2 corresponding to the CBG-PDCCH case (or multi-PDSCH case) to sub-codebook #1 corresponding to the multi-cell (while appending sub-codebook #1 corresponding to the multi-cell case to sub-codebook #0 corresponding to the single-cell case) (or, conversely, in a manner of appending sub-codebook #1 to sub-codebook #2 (while appending sub-codebook #2 to the sub-codebook #0)).

1. In this case, while three UL DAI fields respectively indicating total-DAI informations/values for the three sub-codebooks are configured in the UL DCI or only two UL DAI fields configured, a first UL DAI field may indicate total-DAI information/value for the sub-codebook #0 and a second UL DAI field may indicate total-DAI information/value commonly applied to the sub-codebooks #1 and #2.

- Opt 3-2: A common DAI counting is performed for the multi-cell case and the CBG-PDCH case (or the multi-PDSCH case) (In other words, a DCI corresponding to the multi-cell case may be a structure of determining/signaling a DAI value by considering not only the multi-cell case but also the CBG-PDCH case (or the multi-PDSCH case) and a DCI corresponding to the CBG-PDCH case (or the multi-PDSCH case) may be a structure of determining/signaling a DAI value by considering not only the CBG-PDCH case (or the multi-PDSCH case) but also the multi-cell case.) and one sub-codebook integrated for the two cases may be configured. In this case, the A/N bit number corresponding to one DAI may be determined as a maximum value selected from the DAI A/N size for the multi-cell case and the DAI A/N size for the CBG-PDSCH case (or the DAI A/N size for the multi-PDSCH case).

C. Meanwhile, in a situation that the Type-2 codebook is configured on a specific (PUCCH) cell group, if multi-cell DCI-based PDSCH scheduling is configured on a plurality of cells belonging to the corresponding cell group, a CBG-based PDSCH transmission may be restricted from being configured on any cell in the corresponding cell group to reduce the complexity of the A/N codebook configuration from the perspective of a UE. In a situation that the Type-1 codebook is configured, if multi-cell DCI-based PDSCH scheduling is configured on a plurality of specific cells, a CBG-based PDSCH transmission may be restricted from being configured on any of a plurality of the corresponding cells to reduce the complexity of the A/N codebook configuration from the perspective of the UE.

D. On the other hand, when PDSCH resource #1 on a specific cell indicated through the multi-cell DCI and PDSCH resource #2 indicated through the multi-PDSCH DCI for scheduling the corresponding specific cell overlap each other in time, a UE may perform a PDSCH reception operation in a state of regarding/assuming that the multi-cell DCI-based PDSCH resource #1 is invalid and only the multi-PDSCH DCI-based PDSCH resource #2 is valid (or, on the contrary, in a state of regarding/assuming that the PDSCH resource #2 is invalid and only the PDSCH resource #1 is valid).

i. In addition, when PUSCH resource #1 on a specific cell indicated through multi-cell DCI and PUSCH resource #2 indicated through multi-PUSCH DCI that schedules the corresponding specific cell overlap each other in time, a UE may perform a PUSCH transmission operation in a state of regarding/assuming that the multi-cell DCI-based PUSCH resource #1 is invalid and only the multi-PUSCH DCI-based PUSCH resource #2 is valid (or, on the contrary, in a state of regarding/assuming that the PUSCH resource #2 is invalid and only the PUSCH resource #1 is valid).

5) Proposal 2-4

An A/N bit mapping order in an A/N payload corresponding to one DAI for the multi-cell case (or multi-cell DCI) may be determined in the following manner.

- Opt 4-1: A/N bits corresponding to TBs scheduled with DCI (or a TB actually received by a UE among them (on the rest of cells except the invalid cell)) may be mapped sequentially (by starting with a first bit in the A/N payload) in the order of TB index first - cell index second (the remaining bits (in the A/N payload) after the mapping may be mapped to NACK). The order may mean an ascending order or a descending order. For example, a UE first maps A/N bits in a TB index order (e.g., a TB index ascending order) for all scheduled TBs of a cell having the lowest cell index. When the mapping of the A/N bits for all TB indexes of the corresponding cell is completed, the UE may first map A/N bits in a TB index order for scheduled TBs of a cell having a second lowest cell index.

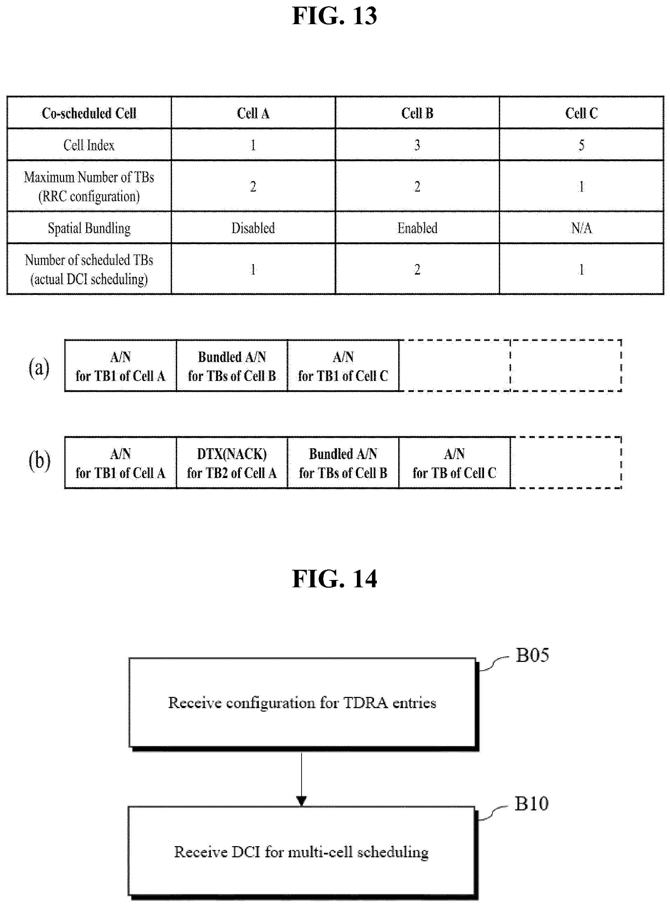

1. If spatial bundling is configured (or only a single TB transmission is configured to available for all multi-cell DCI scheduling target cells), A/N bits corresponding to PDSCHs scheduled with DCI (or a PDSCH actually received a UE (on the rest of the cells except the invalid cell) among them) may be sequentially mapped in the order of cell index. For example, it is assumed in FIG. 13 that Cell A having a cell index of 1, Cell B having a cell index of 3, and Cell C having a cell index of 5 are co-scheduled by a DCI, that a maximum 2-TB is configured for each of Cell A and Cell B, that a maximum 1-TB is configured for Cell C, and that spatial bundling is configured only for Cell B. In addition, it is assumed that the number of TBs actually scheduled by the DCI is 1-TB, 2-TB, and 1-TB for Cell A, Cell B, and Cell C, respectively. (Also, for convenience of description, the DAI A/N size for multi-cell case described in Proposal 2-2 is assumed to be 5-bit.) FIG. 13 (a) may illustrate an example of Opt 1. Referring to FIG. 13 (a), an A/N bit for TB1 of Cell A having the lowest cell index is first mapped. Since TB2 of Cell A is not scheduled, an A/N bit for TBs of Cell B is next mapped. Since spatial bundling is configured on Cell B, the A/N bit for TB1 and the A/N bit for TB2 may be bundled into one A/N bit (e.g., AND operation). Next, an A/N bit for TB1 of Cell C is mapped.

2. In the above description, when mapping the A/N bit corresponding to the TBs scheduled with the DCI or the scheduled PDSCHs in the order of TB/cell index or cell index, the A/N bit corresponding to the invalid cell may be mapped to NACK.

- Opt 4-2: A/N bit corresponding to PDSCHs (cells) scheduled with DCI (or PDSCH (cell) actually received by a UE (on the rest of cells except the invalid cell( among them)) may be mapped sequentially (by starting with a first bit in the A/N payload) in the order of cell index by the maximum number of TBs configured in each cell (the remaining bits (in the A/N payload) after the mapping may be mapped to NACK). The order may mean ascending or descending order.

1. If spatial bundling is configured (or only a single TB transmission is configured to be available for all multi-cell DCI-scheduling target cells), the A/N bit corresponding to PDSCHs scheduled with DCI (or PDSCH actually received by a UE (on the rest of the cells except the invalid cell) among them) may be sequentially mapped in the order of cell index. FIG. 13(b) may be an example of Opt 2. Referring to FIG. 13(b), an A/N bit for TB1 of Cell A having a lowest cell index is first mapped. Since the maximum number of TBs configured on Cell A is 2, an A/N bit for TB2 may be mapped even though TB2 of Cell A is not actually scheduled. An A/N bit for TB2 may be set to NACK/DTX. Next, an A/N bit for TBs of Cell B is mapped. Although the maximum number of TBs configured on Cell B is 2, since spatial bundling is configured on Cell B, an A/N bit for TB1 and an A/N bit for TB2 may be bundled (e.g., AND operation) into one A/N bit. Next, an A/N bit for TB1 of Cell C may be mapped.

2. In the above description, when mapping A/N bits corresponding to PDSCHs (cells) scheduled with DCI in the order of TB/cell index, A/N bit corresponding to the invalid cell may be mapped to NACK.

- Opt 4-3: (If the A/N bit number corresponding to one DAI is determined based on the number of cells in an entire candidate cell set that can be scheduled through the multi-cell DCI,) A/N bits (by the maximum number of TBs configured for each cell) corresponding to cells belonging to the entire candidate cell set may be mapped in the order of cell index irrespective of an actually scheduled (received) PDSCH (cell). The order may mean an ascending or descending order. For example, even if only a combination of some cells among the cells in the candidate cell set was scheduled by a DCI, A/N bits for all cells belonging to the candidate cell set may be mapped based on the cell index order.

If spatial bundling is configured (or all multi-cell DCI scheduling target cells are configured to be capable of a single TB transmission only), the A/N bits corresponding (to a scheduled/received PDSCH) may be mapped sequentially to cells belonging to the entire candidate cell set in the order of cell index irrespective of the actually scheduled (received) PDSCH (cell).

[3] Multi-cell PDSCH scheduling operation & (enhanced) Type-3 A/N codebook configuration

1) Existing operation

A. In the case of the existing enhanced Type-3 codebook (i.e., e-Type-3 CB), while a plurality of candidate e-Type-3 CBs (indexes) composed of different subsets of cells and/or (per-cell) subset of HPNs (HARQ Process Numbers/Indexes/IDs) are configured in advance by RRC, one e-Type-3 CB index among them may be indicated through DCI. A UE operates to configure A/N feedback for the subset of cells/HPNs (PDSCH reception corresponding thereto) configured in the indicated corresponding e-Type-3 CB index and transmit it through an A/N transmission timing point indicated with the same DCI.

2) Proposed operation

A. When a specific e-Type-3 CB index is indicated through the multi-cell DCI above, if a cell/HPN (for convenience, called "extra cell/HPN") that does not belong to the subset of cells/HPNs configured in the corresponding specific e-Type-3 CB index among the (PDSCH transmission) scheduled cell/HPNs through the DCI is included, a UE may operate as follows.

    i. Alt 1: A UE may perform PDSCH reception and corresponding A/N feedback configuration/transmission operations (except the appropriate extra cell/HPN) while regarding that there is no PDSCH transmission/scheduling for the extra cell/HPN.
    ii. Alt 2: The UE may operate to perform PDSCH reception on the assumption that PDSCH is transmitted/scheduled for the extreme cell/HPN as well, and to configure and transmit A/N feedback corresponding to both subset of cells/HPNs configured in the indicated e-Type-3 CB index and the corresponding extra cell/HPN.
    iii. Alt 3: The UE may operate to configure/transmit A/N feedback only for the subset of cells/HPN configured in the indicated e-Type-3 CB index (except the corresponding extra cell/HPN), while performing PDSCH reception on the assumption that PDSCH is transmitted/scheduled for the extra cell/HPN as well.

B. In the case of the proposed operation, a specific e-Type-3 CB index is indicated through the multi-PDSCH DCI, and the same principle of operation may be applied even if (extra) HPN failing to belong to the subset of HPNs configured in the corresponding specific e-Type-3 CB index among the HPNs scheduled (for PDSCH transmission) through the DCI is included.

FIG. 14 illustrates an example of one implementation of signal reception by a UE based on at least some of the above-described embodiments. Even if there is no separate description, the above-described contents may be referred to for better understanding of FIG. 14.

Referring to FIG. 14, a UE may receive configuration(s) for TDRA entries (B05). The UE may receive configuration of a plurality of first TDRA entries for each cell for individual scheduling of each cell. The UE may receive configuration of a plurality of second TDRA entries each of which including TDRA information for multiple cells for multi-cell scheduling. According to an embodiment, the configuration of the first TDRA entries and the configuration of the second TDRA entries may be received through separate signaling or together.

The UE may receive Downlink Control Information (DCI) for multi-cell scheduling through a Physical Downlink Control CHannel (PDCCH) (B10).

The DCI for the multi-cell scheduling may provide one TDRA field for all of one or more cells scheduled together. A value of the one TDRA field may be related to one of the plurality of second TDRA entries. The TDRA information for the multiple cells included in each of the plurality of second TDRA entries may be configured based on the plurality of first TDRA entries configured for individual scheduling of each of the cells.

Each of the second TDRA entries may be related to multiple TDRA parameter sets including a first TDRA parameter set for a first cell and a second TDRA parameter set for a second cell. The first TDRA parameter set may belong to the first TDRA entries configured for the first cell, and the second TDRA parameter set may belong to the first TDRA entries configured for the second cell. Each parameter set may include a combination of {K0, mapping_type, SLIV} parameters. 'KO' may be a slot offset from the PDCCH to a scheduled signal, 'mapping_type' may be a resource mapping type of the scheduled signal, and 'SLIV' may be information regarding a starting symbol and length of the scheduled signal.

Each of the second TDRA entries may be related to a combination of N first TDRA entries for N cells.

The TDRA information of the first cell and the TDRA information of the second cell included in each of the second TDRA entries may be one of the first TDRA entries of the first cell and one of the first TDRA entries of the second cell, respectively.

The UE may transmit or receive a signal on the one or more cells scheduled together through the DCI for the multi-cell scheduling.

The configuration of the first TDRA entries and the configuration of the second TDRA entries may be received through higher layer signaling, respectively.

The plurality of first TDRA entries configured for each of the multiple cells may be related to N first TDRA tables for N cells. The plurality of second TDRA entries may be related to one second TDRA table configured for the N cells.

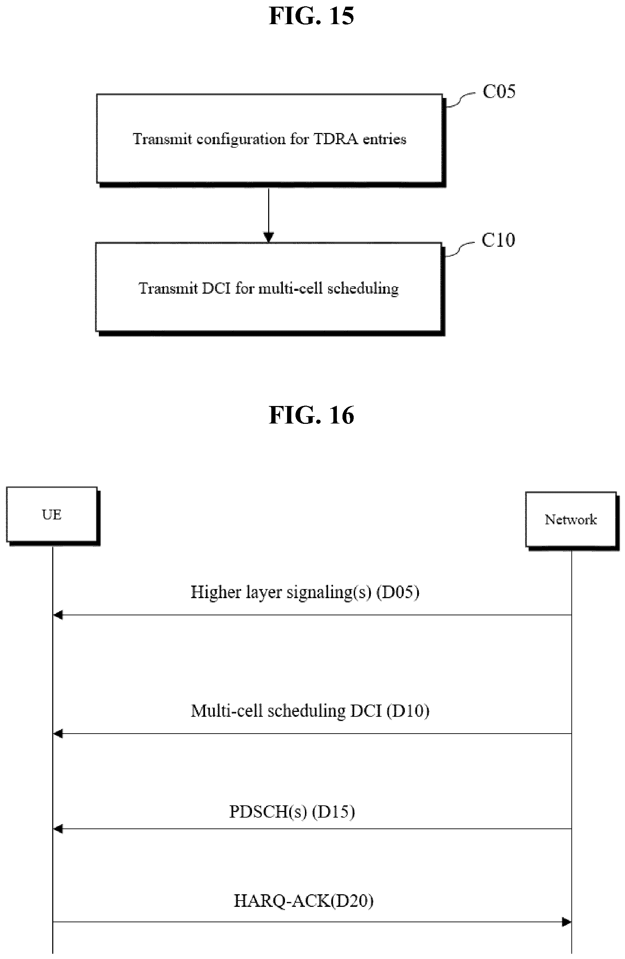

FIG. 15 illustrates one example of implementation of signal transmission by a base station based on at least some of the above-described embodiments. Even if there is no separate description, the above-described contents may be referred to for better understanding of FIG. 15.

Referring to FIG. 15, a base station may transmit configuration(s) for TDRA entries (C05). The base station may transmit configuration of a plurality of first TDRA entries for each cell for individual scheduling of each cell. The base station may transmit configuration of a plurality of second TDRA entries including TDRA information for multiple cells, respectively, for multi-cell scheduling. According to an embodiment, the configuration of the first TDRA entries and the configuration of the second TDRA entries may be transmitted through separate signaling or may be transmitted together.

The base station may transmit Downlink Control Information (DCI) for multi-cell scheduling through a Physical Downlink Control CHannel (PDCCH) (C10).

The DCI for the multi-cell scheduling may provide one TDRA field for all of one or two or more cells scheduled together. A value of the one TDRA field may be related to one of the plurality of second TDRA entries. The TDRA information regarding the multi-cells included in each of the plurality of second TDRA entries may be configured based on the plurality of first TDRA entries configured for individual scheduling of each cell.

Each of the second TDRA entries may be related to multiple TDRA parameter sets including a first TDRA parameter set for a first cell and a second TDRA parameter set for a second cell. The first TDRA parameter set may belong to the first TDRA entries configured for the first cell, and the second TDRA parameter set may belong to the first TDRA entries configured for the second cell. Each parameter set may include a combination of {K0, mapping_type, SLIV} parameters. 'KO' may be a slot offset from the PDCCH to a scheduled signal, 'mapping_type' may be a resource mapping type of the scheduled signal, and 'SLIV' may be information regarding a starting symbol and length of the scheduled signal.

Each of the second TDRA entries may be related to a combination of N first TDRA entries for N cells.

TDRA information of the first cell and TDRA information of the second cell included in each of the second TDRA entries may be one of the first TDRA entries of the first cell and one of the first TDRA entries of the second cell, respectively.

The base station may transmit or receive a signal on the one or more cells scheduled together through the DCI for the multi-cell scheduling.

The configuration of the first TDRA entries and the configuration of the second TDRA entries may be transmitted through higher layer signaling, respectively.

The plurality of first TDRA entries configured for each of a plurality of the cells may be related to N first TDRA tables for N cells. The plurality of second TDRA entries may be related to one second TDRA table configured for the N cells.

FIG. 16 is a diagram illustrating a method of transmitting and receiving signals in a network system according to an embodiment. Even if there is no separate description, the above-described contents may be referred to for better understanding of FIG. 16.

Referring to FIG. 16, a UE may receive information from a network through higher layer signaling(s) (D05). The information received through the higher layer signaling may include at least one of a configuration of a plurality of first TDRA entries for each cell for individual scheduling of each cell and a configuration of a plurality of second TDRA entries including TDRA information for multiple cells for multi-cell scheduling. According to an embodiment, the configuration of the first TDRA entries and the configuration of the second TDRA entries may be received through separate signaling or together.

A UE may receive Downlink Control Information (DCI) for multi-cell scheduling through a Physical Downlink Control CHannel (PDCCH) from the network (D10).

The UE may receive PDSCH(s) on one or more cells scheduled together from the network through the DCI (D15).

The UE may transmit a HARQ-ACK for the received PDSCH(s) to the network (D20).

The DCI for the multi-cell scheduling may provide one TDRA field for all of one or more cells scheduled together. A value of the one TDRA field may be related to one of the plurality of second TDRA entries. The TDRA information for the multiple cells included in each of the plurality of second TDRA entries may be configured based on the plurality of first TDRA entries configured for individual scheduling of each of the cells.

Each of the second TDRA entries may be related to multiple TDRA parameter sets including a first TDRA parameter set for a first cell and a second TDRA parameter set for a second cell. The first TDRA parameter set may belong to the first TDRA entries configured for the first cell, and the second TDRA parameter set may belong to the first TDRA entries configured for the second cell. Each parameter set may include a combination of {K0, mapping_type, SLIV} parameters. 'KO' may be a slot offset from the PDCCH to a scheduled signal, 'mapping_type' may be a resource mapping type of the scheduled signal, and 'SLIV' may be information regarding a start symbol and length of the scheduled signal.

Each of the second TDRA entries may be related to a combination of N first TDRA entries for N cells.

TDRA information of the first cell and TDRA information of the second cell included in each of the second TDRA entries may be one of the first TDRA entries of the first cell and one of the first TDRA entries of the second cell, respectively.

The plurality of first TDRA entries configured for each of a plurality of the cells may be related to N first TDRA tables for N cells. The plurality of second TDRA entries may be related to one second TDRA table configured for the N cells.

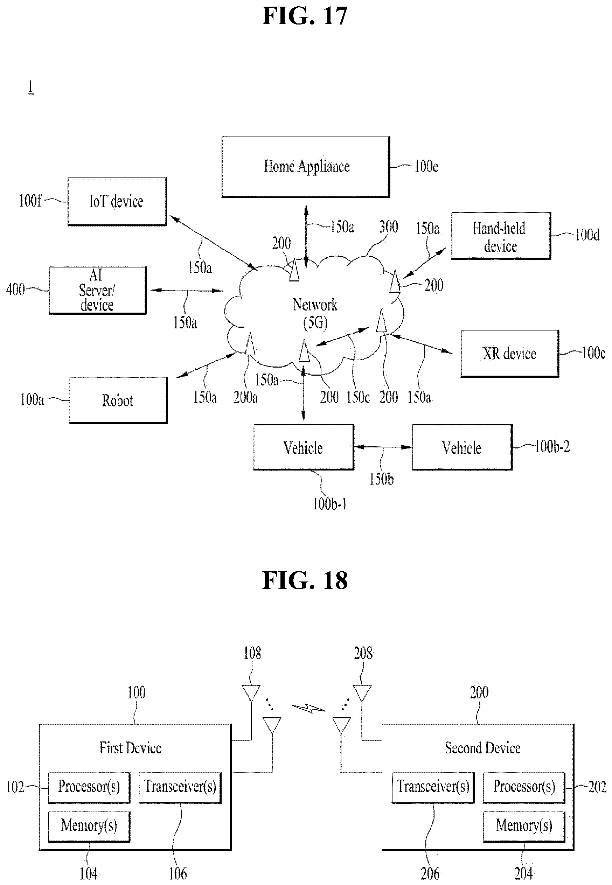

FIG. 17 illustrates a communication system 1 applied to the present disclosure.

Referring to FIG. 17, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/-connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 18 illustrates wireless devices applicable to the present disclosure.

Referring to FIG. 18, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 17.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

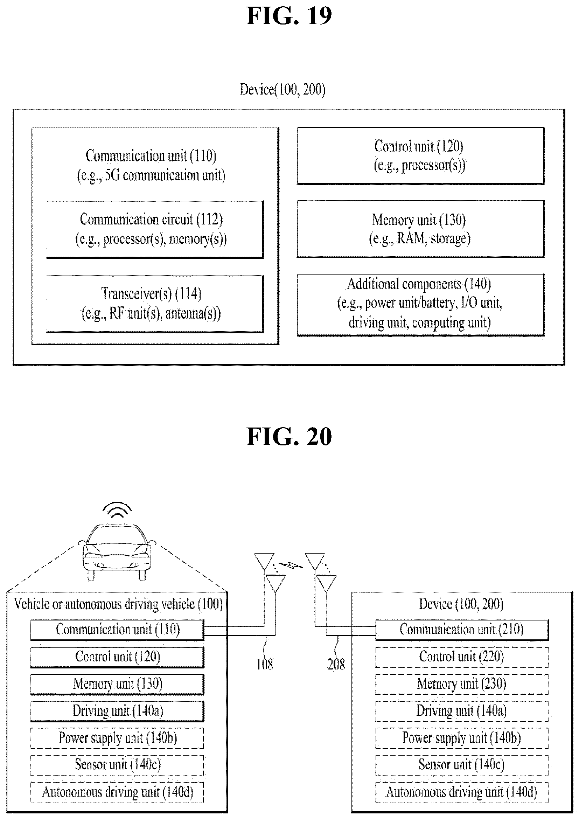

FIG. 19 illustrates another example of a wireless device applied to the present disclosure. The wireless device may be implemented in various forms according to a use-case/service (refer to FIG. 17).

Referring to FIG. 19, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 18. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 17), the vehicles (100b-1 and 100b-2 of FIG. 17), the XR device (100c of FIG. 17), the hand-held device (100d of FIG. 17), the home appliance (100e of FIG. 17), the IoT device (100f of FIG. 17), a digital broadcast user equipment, a hologram device, a public safety device, an MTC device, a medicine device, a fintech device (or a finance device), a security device, a climate/environment device, the AI server/device (400 of FIG. 17), the BSs (200 of FIG. 17), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

FIG. 20 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 20, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

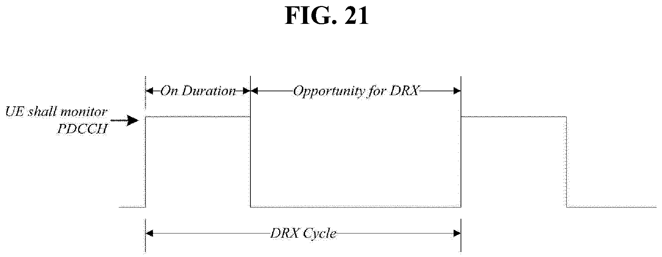

FIG. 21 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 21, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration.

When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

Table 9 describes a DRX operation of a UE (in the RRC_CONNECTED state). Referring to Table 9, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods, as illustrated in FIG. 5.

[Table 7]

|  | Type of signals | UE procedure |
|---|---|---|
| 1st step | RRC signalling(MAC-CellGroupConfig) | - Receive DRX configuration information |
| 2nd Step | MAC CE((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX.

- Value of drx-OnDurationTimer: defines the duration of the starting period of the DRX cycle
- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission
- Value of drx-HARQ-RTT-TimerDL: defines the duration of a maximum time period until a grant for a UL retransmission is received after reception of a grant for a UL initial transmission
- drx-LongCycleStartOffset: defines the duration and starting time of a DRX cycle
- drx-ShortCycle (optional): defines the duration of a short DRX cycle

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## INDUSTRIAL APPLICABILITY

The present disclosure is applicable to UEs, BSs, or other apparatuses in a wireless mobile communication system.

**Claims**

1. A method of receiving a signal by a User Equipment (UE) in a wireless communication system, the method comprising:

receiving a configuration of a plurality of first Time Domain Resource Allocation (TDRA) entries for each cell for individual scheduling of each cell;

receiving a configuration of a plurality of second TDRA Time Domain Resource Allocation (TDRA) entries each including TDRA information for multiple cells for multi-cell scheduling; and

receiving Downlink Control Information (DCI) for the multi-cell scheduling through a Physical Downlink Control Channel (PDCCH),

wherein the DCI for the multi-cell scheduling provides one TDRA field for all of one or more cells scheduled together,

wherein a value of the one TDRA field is related to one of the plurality of second TDRA entries, and

wherein the TDRA information for the multiple cells included in each of the plurality of second TDRA entries is configured based on the plurality of first TDRA entries configured for individual scheduling of each cell.

2. The method of claim 1, wherein each of the second TDRA entries is related to multiple TDRA parameter sets including a first TDRA parameter set for a first cell and a second TDRA parameter set for a second cell, and

wherein the first TDRA parameter set belongs to the first TDRA entries configured for the first cell, and the second TDRA parameter set belongs to the first TDRA entries set for the second cell.

3. The method of claim 2, wherein each parameter set comprises a combination of {K0, mapping_type, SLIV} parameters, where 'K0' indicates a slot offset from the PDCCH to a scheduled signal, wherein 'mapping_type' indicates a resource mapping type of the scheduled signal, and wherein 'SLIV' indicates starting symbol and length information of the scheduled signal.

4. The method of claim 1, wherein each of the second TDRA entries is related to a combination of N first TDRA entries for N cells.

5. The method of claim 1, wherein the TDRA information of a first cell and the TDRA information of a second cell included in each of the second TDRA entries are one of the first TDRA entries of the first cell and one of the first TDRA entries of the second cell, respectively.

6. The method of claim 1, further comprising:
transmitting or receiving a signal on the one or more cells scheduled together through the DCI for the multi-cell scheduling.

7. The method of claim 1, wherein the configuration of the first TDRA entries and the configuration of the second TDRA entries are received through higher layer signaling, respectively.

8. The method of claim 1, wherein the plurality of first TDRA entries configured for each of the multiple cells are related to N first TDRA tables for N cells and

wherein the plurality of second TDRA entries are related to a single second TDRA table configured for the N cells.

9. A computer-readable recording medium storing a program for performing the method of claim 1.

10. A device for wireless communication, the device comprising:

a memory configured to store instructions; and
a processor configured to perform operations based on executing the instructions, the operations comprising:

receiving a configuration of a plurality of first Time Domain Resource Allocation (TDRA) entries for each cell for individual scheduling of each cell;

receiving a configuration of a plurality of second TDRA Time Domain Resource Allocation (TDRA) entries each including TDRA information for multiple cells for multi-cell scheduling; and

receiving Downlink Control Information (DCI) for the multi-cell scheduling through a Physical Downlink Control Channel (PDCCH),

wherein the DCI for the multi-cell scheduling provides one TDRA field for all of one or more cells scheduled together,
wherein a value of the one TDRA field is related to one of the plurality of second TDRA entries, and
wherein the TDRA information for the multiple cells included in each of the plurality of second TDRA entries is
configured based on the plurality of first TDRA entries configured for individual scheduling of each cell.

11. The device of claim 10, further comprising:
a transceiver configured to transmit or receive a radio signal under the control of the processor.

12. The device of claim 10, wherein the device is a User Equipment (UE) in a wireless communication system.

13. The device of claim 11, further comprising:
The device is an application specific integrated circuit (ASIC) or a digital signal processing device for controlling a User
Equipment (UE).

14. A method of transmitting a signal by a base station in a wireless communication system, the method comprising:

transmitting a configuration of a plurality of first Time Domain Resource Allocation (TDRA) entries for each cell for
individual scheduling of each cell;
transmitting a configuration of a plurality of second TDRA Time Domain Resource Allocation (TDRA) entries each
including TDRA information for multiple cells for multi-cell scheduling; and
transmitting Downlink Control Information (DCI) for multi-cell scheduling through a Physical Downlink Control
Channel (PDCCH),
wherein the DCI for the multi-cell scheduling provides a single TDRA field for all of one or more cells scheduled
together,
wherein a value of the single TDRA field is related to one of the plurality of second TDRA entries, and
wherein the TDRA information for the multiple cells included in each of the plurality of second TDRA entries is
configured based on the plurality of first TDRA entries configured for individual scheduling of each cell.

15. A base station transmitting a signal in a wireless communication system, the base station comprising:

a transceiver; and
a processor configured to control the transceiver to transmit a configuration of a plurality of first Time Domain
Resource Allocation (TDRA) entries for each cell for individual scheduling of each cell, to transmit a configuration
of a plurality of second TDRA Time Domain Resource Allocation (TDRA) entries each including TDRA information
for multiple cells for multi-cell scheduling, and to transmit Downlink Control Information (DCI) for multi-cell
scheduling through a Physical Downlink Control Channel (PDCCH),
wherein the DCI for the multi-cell scheduling provides a single TDRA field for all of one or more cells scheduled
together,
wherein a value of the single TDRA field is related to one of the plurality of second TDRA entries, and
wherein the TDRA information for the multiple cells included in each of the plurality of second TDRA entries is
configured based on the plurality of first TDRA entries configured for individual scheduling of each cell.

# FIG. 1

Initial Cell Search — PSS/SSS & [DLRS] & PBCH — S101

System Information Reception — PDCCH/PDSCH (BCCH) — S102

Random Access Procedure — PRACH (S103) — PDCCH/PDSCH (S104) — PRACH (S105) — PDCCH/PDSCH (S106)

General DL/UL Tx/Rx — S108 — PDCCH/PDSCH — PUSCH/PUCCH — S107
• DL/UL ACK/NACK
• UE CQI/PMI/Rank Report using PUSCH and PUCCH

# FIG. 2

One Frame (10ms)

Half-Frame (5ms) — Half-Frame (5ms)

Subframe 0 (1ms) ... Subframe 4 (1ms) — Subframe 5 (1ms) ... Subframe 9 (1ms)

Subframe (1ms)

15KHz — Slot (14 symbols) — 1ms

30KHz — Slot 0 (14 symbols) — Slot 1 — 500us

60KHz — Slot 0 (14 symbols) — Slot 1 — Slot 2 — Slot 3 — 250us

120KHz — Slot 0 (14 symbols) — Slot 1 — Slot 2 — Slot 3 — Slot 4 — Slot 5 — Slot 6 — Slot 7 — 125us

# FIG. 3

# FIG. 4

# FIG. 5

DL assingment-to-PDSCH offset (K0)

slot

PDSCH-to-HARQ-ACK reporting offset (K1)

# FIG. 6

UL grant-to-PUSCH offset (K2)

# FIG. 7

Cell A
(Scheduling Cell)

Cell B
(Scheduled Cell)

Cell C
(Scheduled Cell)

CORESET
(or Search Space Set)

PDCCH

PDSCH or PUSCH

Freq.

Slot #n          Slot #n+1          Slot #n+2          Time

# FIG. 8

(a) Carrier aggregation between L-band and U-band

(b) standalone U-band(s)

# FIG. 9

# FIG. 10

```
k0                    INTEGER(0..32)
mappingType           ENUMERATED {typeA, typeB},
startSymbolAndLength  INTEGER (0..127)
```

— ranges of {k0, mappingType, SLIV} values can be configured for TDRA table

(SC) TDRA table configuration (TDRA list)

| index | k0 | mappingType | SLIV |
|-------|----|-------------|------|
| 1 | 0 | typeA | 1 |
| 2 | 1 | typeA | 3 |
| ... | | | |
| M | 3 | typeB | 7 |

(a) TDRA table for single cell scheduling of Cell A

| index | k0 | mappingType | SLIV |
|-------|----|-------------|------|
| 1 | 5 | typeB | 20 |
| 2 | 15 | typeA | 40 |
| ... | | | |
| X | 20 | typeB | 80 |

(b) TDRA table for single cell scheduling of Cell B

| index | k0 | mappingType | SLIV |
|-------|----|-------------|------|
| 1 | 20 | typeB | 30 |
| 2 | 23 | typeA | 50 |
| ... | | | |
| Y | 32 | typeA | 127 |

(c) TDRA table for single cell scheduling of Cell C

extended TDRA table configuration signaling

| index | Cell A | Cell B | Cell C |
|-------|--------|--------|--------|
| 1 | M | 1 | 2 |
| 2 | 2 | 1 | Y |
| 3 | 2 | X | 1 |
| ... | | | |

| index | Cell A | | | Cell B | | | Cell C | | |
|-------|--------|-------------|------|----|-------------|------|----|-------------|------|
| | k0 | mappingType | SLIV | k0 | mappingType | SLIV | k0 | mappingType | SLIV |
| 1 | 3 | typeB | 7 | 5 | typeB | 20 | 23 | typeA | 50 |
| 2 | 1 | typeA | 3 | 5 | typeB | 20 | 32 | typeA | 127 |
| 3 | 1 | typeA | 3 | 20 | typeB | 80 | 20 | typeB | 30 |
| ... | | | | | | | | | |

(d) extended TDRA table for multi-cell scheduling of Cell A, B, C

# FIG. 11

# FIG. 12

| Cell Combination | Co-scheduled Cells | Number of Co-scheduled Cells |
|---|---|---|
| 1 | {Cell#1, Cell# 3, Cell#5} | 1st value (=3) |
| 2 | {Cell#1} | 2nd value (=1) |
| 3 | {Cell#2, Cell#3, Cell#4} | 3rd value (=3) |
| ............... | ............... | ............... |
| M | {Cell#2, Cell#4, Cell#5, Cell#N} | M-th value |

Maximum Number of Co-scheduled Cells = Max {1st value, 2nd value, 3rd value,...., M-th value}

# FIG. 13

| Co-scheduled Cell | Cell A | Cell B | Cell C |
|---|---|---|---|
| Cell Index | 1 | 3 | 5 |
| Maximum Number of TBs (RRC configuration) | 2 | 2 | 1 |
| Spatial Bundling | Disabled | Enabled | N/A |
| Number of scheduled TBs (actual DCI scheduling) | 1 | 2 | 1 |

(a)

| A/N for TB1 of Cell A | Bundled A/N for TBs of Cell B | A/N for TB1 of Cell C | | |
|---|---|---|---|---|

(b)

| A/N for TB1 of Cell A | DTX(NACK) for TB2 of Cell A | Bundled A/N for TBs of Cell B | A/N for TB of Cell C | |
|---|---|---|---|---|

# FIG. 14

Receive configuration for TDRA entries — B05

Receive DCI for multi-cell scheduling — B10

# FIG. 15

Transmit configuration for TDRA entries — C05

Transmit DCI for multi-cell scheduling — C10

# FIG. 16

| UE | | Network |
|---|---|---|

Higher layer signaling(s) (D05)

Multi-cell scheduling DCI (D10)

PDSCH(s) (D15)

HARQ-ACK(D20)

# FIG. 17

# FIG. 18

# FIG. 19

Device(100, 200)

| | |
|---|---|
| **Communication unit (110)**<br>(e.g., 5G communication unit) | **Control unit (120)**<br>(e.g., processor(s)) |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

# FIG. 20

| Vehicle or autonomous driving vehicle (100) |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108    208

| Device (100, 200) |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

# FIG. 21

UE shall monitor PDCCH

On Duration — Opportunity for DRX

DRX Cycle

## INTERNATIONAL SEARCH REPORT

| International application No. |
| --- |
| **PCT/KR2023/010886** |

| **A.** | **CLASSIFICATION OF SUBJECT MATTER** |
| --- | --- |

**H04L 1/18**(2006.01)i; **H04L 5/00**(2006.01)i; **H04W 72/232**(2023.01)i; **H04W 72/04**(2009.01)i

According to International Patent Classification (IPC) or to both national classification and IPC

| **B.** | **FIELDS SEARCHED** |
| --- | --- |

Minimum documentation searched (classification system followed by classification symbols)

H04L 1/18(2006.01); H04L 1/08(2006.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다중 접속(multiple access), 다중 셀(multiple cell), 스케줄링(scheduling), TDRA(time domain resource allocation), PDCCH(physical downlink control channel), DCI(downlink control information)

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| A | KR 10-2022-0004070 A (TELEFONAKTIEBOLAGET LM ERICSSON (PUBL)) 11 January 2022 (2022-01-11)<br>See paragraphs [0031] and [0033]; and claims 1, 3 and 9. | 1-15 |
| A | KR 10-2022-0018440 A (SAMSUNG ELECTRONICS CO., LTD.) 15 February 2022 (2022-02-15)<br>See paragraphs [0144]-[0165]; claims 1-2; and figures 5a-6c. | 1-15 |
| A | KR 10-2022-0090565 A (LG ELECTRONICS INC.) 29 June 2022 (2022-06-29)<br>See paragraphs [0327]-[0364]; and figures 10-13. | 1-15 |
| A | KR 10-2020-0115297 A (SAMSUNG ELECTRONICS CO., LTD.) 07 October 2020 (2020-10-07)<br>See paragraphs [0096]-[0122]; and figure 2a. | 1-15 |
| A | US 2022-0216944 A1 (TELEFONAKTIEBOLAGET LM ERICSSON (PUBL)) 07 July 2022 (2022-07-07)<br>See paragraphs [0150]-[0159]; and figures 8-10. | 1-15 |

☐ Further documents are listed in the continuation of Box C.     ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 November 2023** | **02 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/010886**

| Patent document cited in search report | | | Publication date (day/month/year) | Patent family member(s) | | | Publication date (day/month/year) |
|---|---|---|---|---|---|---|---|
| KR | 10-2022-0004070 | A | 11 January 2022 | AU | 2020-255993 | A1 | 08 October 2020 |
| | | | | CA | 3136070 | A1 | 08 October 2020 |
| | | | | CL | 2021002566 | A1 | 06 May 2022 |
| | | | | CN | 113711678 | A | 26 November 2021 |
| | | | | CO | 2021014741 | A2 | 10 December 2021 |
| | | | | EP | 3949623 | A1 | 09 February 2022 |
| | | | | JP | 2022-526707 | A | 26 May 2022 |
| | | | | MX | 2021011909 | A | 26 October 2021 |
| | | | | US | 2022-0159700 | A1 | 19 May 2022 |
| | | | | WO | 2020-204800 | A1 | 08 October 2020 |
| KR | 10-2022-0018440 | A | 15 February 2022 | CN | 114071769 | A | 18 February 2022 |
| | | | | EP | 3952196 | A1 | 09 February 2022 |
| | | | | TW | 202207742 | A | 16 February 2022 |
| | | | | US | 11729790 | B2 | 15 August 2023 |
| | | | | US | 2022-0046610 | A1 | 10 February 2022 |
| KR | 10-2022-0090565 | A | 29 June 2022 | CN | 115699646 | A | 03 February 2023 |
| | | | | EP | 4068666 | A1 | 05 October 2022 |
| | | | | JP | 2023-520497 | A | 17 May 2023 |
| | | | | US | 2023-0049739 | A1 | 16 February 2023 |
| | | | | US | 2023-0171043 | A1 | 01 June 2023 |
| | | | | WO | 2022-080928 | A1 | 21 April 2022 |
| KR | 10-2020-0115297 | A | 07 October 2020 | CN | 111757501 | A | 09 October 2020 |
| | | | | EP | 3726768 | A2 | 21 October 2020 |
| | | | | EP | 3726768 | A3 | 30 December 2020 |
| | | | | US | 11553471 | B2 | 10 January 2023 |
| | | | | US | 2020-0314817 | A1 | 01 October 2020 |
| | | | | US | 2023-0105623 | A1 | 06 April 2023 |
| US | 2022-0216944 | A1 | 07 July 2022 | CN | 114008950 | A | 01 February 2022 |
| | | | | CO | 2021015717 | A2 | 30 November 2021 |
| | | | | EP | 3963772 | A1 | 09 March 2022 |
| | | | | JP | 2022-531427 | A | 06 July 2022 |
| | | | | JP | 7333413 | B2 | 24 August 2023 |
| | | | | KR | 10-2022-0002593 | A | 06 January 2022 |
| | | | | WO | 2020-225690 | A1 | 12 November 2020 |

Form PCT/ISA/210 (patent family annex) (July 2022)